(19) Europäisches Patentamt
European Patent Office
Office européen des brevets

(11) **EP 2 536 060 A1**

(12) **EUROPEAN PATENT APPLICATION**
published in accordance with Art. 153(4) EPC

(43) Date of publication:
**19.12.2012 Bulletin 2012/51**

(51) Int Cl.:
***H04L 1/16*** (2006.01)

(21) Application number: **10856103.6**

(22) Date of filing: **31.12.2010**

(86) International application number:
**PCT/CN2010/080562**

(87) International publication number:
**WO 2012/022105 (23.02.2012 Gazette 2012/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2010 CN 201010258746**

(71) Applicant: **ZTE Corporation**
**Shenzhen, Guangdong 518057 (CN)**

(72) Inventors:
• **LIANG, Chunli**
**Shenzhen**
**Guangdong 518057 (CN)**
• **DAI, Bo**
**Shenzhen**
**Guangdong 518057 (CN)**
• **HAO, Peng**
**Shenzhen**
**Guangdong 518057 (CN)**
• **YANG, Weiwei**
**Shenzhen**
**Guangdong 518057 (CN)**
• **ZHU, Peng**
**Shenzhen**
**Guangdong 518057 (CN)**
• **ZHANG, Yuqiang**
**Shenzhen**
**Guangdong 518057 (CN)**

(74) Representative: **Davies, Gregory Mark et al**
**Urquhart-Dykes & Lord LLP**
**7th Floor, Churchill House**
**Churchill Way**
**Cardiff CF10 2HH (GB)**

(54) **METHOD FOR TRANSMITTING ACKNOWLEDGEMENT/NEGATIVE ACKNOWLEDGEMENT MESSAGE ON PHYSICAL UPLINK CONTROL CHANNEL AND USER EQUIPMENT THEREOF**

(57) The present invention provides a method for transmitting an acknowledgement/negative acknowledgement message. A terminal performs a bundling operation on ACK/NACK message of various received downlink component carriers, obtains the bundled ACK/ NACK response message and transmits it on a physical uplink control channel appointed by a base station and the terminal. The present invention realizes transmission of the ACK/NACK response message in a scenario of carrier aggregation.

FIG. 2

EP 2 536 060 A1

## Description

Technical Field

The present invention relates to the communication filed, and in particular, to a method for transmitting an acknowledgement/negative-acknowledgement message on a physical uplink control channel in a scenario of large bandwidth.

Background Art

In an HARQ (Hybrid Automatic Repeat Request) mode, codes transmitted by a transmitting end not only can perform error detection but also have a certain error-correcting capability. After receiving codewords, a decoder of a receiving end firstly detects the error condition, and if it is within the error-correcting capability of the codes, the errors are corrected automatically; and if there are so many errors which go beyond the error-correcting capability of the codes, but the errors can be detected, then the receiving end sends a decision signal to the transmitting end through a feedback channel to request the transmitting end to retransmit the information. In an OFDM (Orthogonal Frequency Division Multiplex) system, transmission correctness/error is indicated by an Acknowledgement/Negative-Acknowledgement (ACK/NACK) control signaling, based on that it is judged whether retransmission is needed.

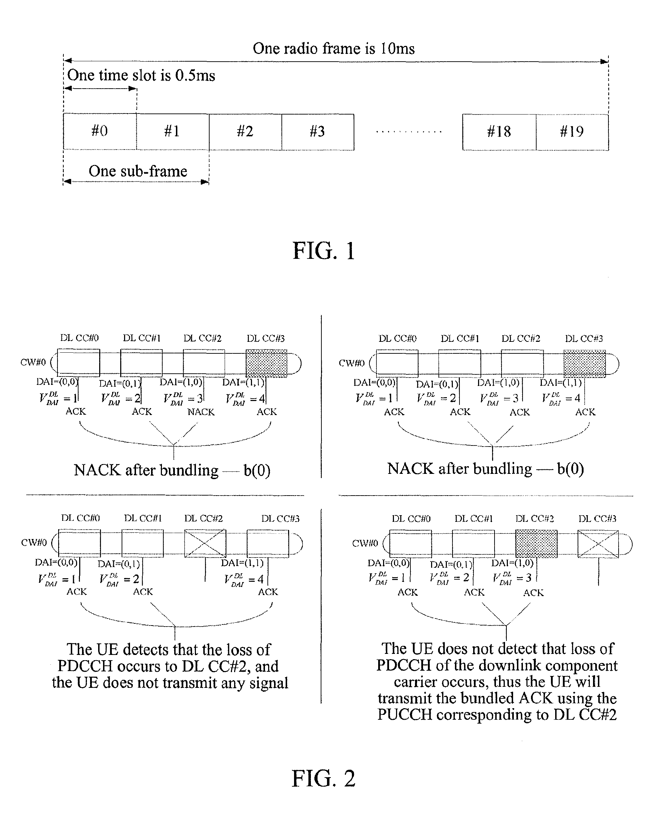

The Long Term Evolution (LTE) system is an important project of the Third Generation Partnership Project. FIG. 1 shows a structure diagram of a basic frame structure in an LTE system. As shown in FIG. 1, the frame structure is divided into four levels of a radio frame, a half frame, a sub-frame, a time slot and a symbol. The length of one radio frame is 10ms; one radio frame is composed of two half frames, and the length of each half frame is 5ms; one half frame is composed of five sub-frames, and the length of each sub-frame is 1ms; and one sub-frame is composed of two time slots, and the length of each time slot is 0.5ms. When the LTE system adopts a normal cyclic prefix, one time slot includes seven uplink/downlink symbols with a length of 66.7us, wherein, the cyclic prefix length of the first symbol is 5.21us, and the cyclic prefix length of other six symbols is 4.69us. When the LTE adopts an extended cyclic prefix, one time slot includes six uplink/downlink symbols with a length of 66.7us, wherein, the cyclic prefix length of each symbol is 16.67us.

In the downlink HARQ of the LTE, when a UE (User Equipment) does not have a Physical Uplink Shared Channel (PUSCH) to transmit, an ACK/NACK message corresponding to a Physical Downlink Shared Channel (PDSCH) is transmitted on a Physical Uplink Control Channel (PUCCH). The LTE defines various PUCCH formats which include a PUCCH format 1/1a/1b and a format 2/2a/2b. The format 1 is used to transmit an SR (Scheduling Request) signal of the UE, The formats 1a and 1b are used to feed back a 1-bit ACK/NACK message and a 2-bit ACK/NACK message respectively, the format 2 is used to transmit downlink Channel States Information (CSI, including CQI: Channel Quality Information, PMI: Precoding matrix indicator and RI: Rank Indication), the format 2a is used to transmit CSI and 1-bit ACK/NACK message, and the format 2b is used to transmit CSI information and 2-bit ACK/NACK message. The format 2a/2b is only used for the normal cyclic prefix.

The format 1, the format 1a and the format 1b have the same channel structure, wherein, the format 1 multiplies a data symbol by a fixed modulation symbol "1" and whether a SR information is sent by whether there is a format 1 channel; the format 1a multiplies a data symbol by a BPSK (Binary Phase Shift Keying) symbol and transmits the ACK/NACK message of a single codeword through the BPSK symbol; and the format 1b multiplies a data symbol by a QPSK (Quadrature Phase Shift Keying) symbol and transmits the ACK/NACK message of a dual-codeword by the QPSK symbol. The format 2, the format 2a and the format 2b have the same channel structure, wherein, the format 2 transmits CSI information on a data symbol, and an information bit are not carried on a pilot (reference signal) symbol; the format 2a transmits CSI information on a data symbol, a pilot (reference signal) symbol is multiplied by a BPSK symbol, and the ACK/NACK message of a single codeword is transmitted by the BPSK symbol; and the format 2b transmits CSI information on a data symbol, a pilot (reference signal) symbol is multiplied by a QPSK symbol, and the ACK/NACK message of a dual-codeword is transmitted by the QPSK symbol.

For the PUCCH format 1b, the transmitted 2-bit information is defined as $b(0)$ and $b(1)$.

In a time division duplex system of the LTE, there are two methods to transmit the ACK/NACK message: one is bundling, the main idea of which is that a Logical AND operation is performed on the ACK/NACK message of a transport block corresponding to each downlink sub-frame that needs to be fed back on the uplink sub-frame, and if one downlink sub-frame has 2 codewords, the UE has to feed back 2-bit ACK/NACK message, and if each sub-frame has only one codeword, the UE will feed back 1-bit ACK/NACK message; the other is multiplexing with channel selection (referred to as multiplexing in short), the main idea of which is that different feedback states of the downlink sub-frame that needs to be fed back on the uplink sub-frame is indicated by using different PUCCHs and different modulation symbols on that channels, if the downlink sub-frame has a plurality of codewords, a Logical AND (also called as spatial bundling) is firstly performed on the ACK/NACK fed back by the plurality of codewords of the downlink sub-frame and then a channel selection is performed on the ACK/NACK, and then the ACK/NACK is transmitted using the PUCCH format 1b. That is to say, the ACK/NACK message after the Logical AND operation is indicated by the 2-bit information of $b(0)$ and $b(1)$ carried by the PUCCH format 1b and the index of the PUCCH.

In order to meet the requirement of an International Telecommunication Union-Advanced (ITU-Advanced), a Long Term Evolution Advanced (LTE-A) system, as an evolved standard of the LTE, needs to support a larger system bandwidth (up to 100MHz), and needs to be backward compatible with the existing standards of the LTE. Based on the existing LTE system, the bandwidths of the LTE system can be combined to obtain a larger bandwidth, and that technology is called a Carrier Aggregation (CA) technology. That technology can improve frequency spectrum efficiency of an IMT-Advance system, alleviate shortage of frequency spectrum resources, and thus optimize use of frequency spectrum resources.

When the LTE-A adopts the CA technology, and when the UE is configured with 4 downlink component carriers, the UE needs to feed back the ACK/NACKs of the 4 downlink component carriers. In the case of MIMO, the UE needs to feed back the ACK/NACK of each codeword, so, when the UE is configured with 4 downlink component carriers, the UE needs to feed back 8 ACK/NACKs. In a practical system, due to difference of the ability of the UE and its location in a cell, the uplink coverage performance of its transmitted signal is different; therefore, in order to ensure the uplink coverage performance, the base station side needs to configure different feedback modes of the uplink control channel for the UE. When the UE is in a scenario with power limited, the UE usually feeds back the ACK/NACK message by adopting the bundling method. At present, the LTE-Advanced system has not defined any specific mode for feeding back the ACK/NACK message on the physical uplink control channel by adopting the bundling method in the carrier aggregation system.

Summary of the Invention

The technical problem to be solved in the present invention is to provide a method for transmitting an acknowledgement/negative-acknowledgement message and a terminal, so as to realize the transmission of the acknowledgement/negative-acknowledgement message in a carrier aggregation system.

In order to solve the above problem, the present invention provides a method for transmitting an acknowledgement/negative-acknowledgement message, and the method comprises:

a terminal performing a bundling operation on acknowledgement/negative-acknowledgement (ACK/NACK) messages of various received downlink component carriers, and transmitting the bundled ACK/NACK message on a physical uplink control channel appointed by a base station and the terminal.

Wherein, when downlink control information received by the terminal comprises downlink assignment information, the step of the terminal performing the bundling operation on the ACK/NACK messages of various received downlink component carriers comprises:

the terminal performing a logical AND operation on the ACK/NACK messages of codewords corresponding to various received component carriers to obtain the bundled ACK/NACK message; wherein, if a downlink transmission mode of at least one of the downlink component carriers configured by the base station for the terminal belongs to a transmission mode comprising 2 codewords, the bundled ACK/NACK message is 2 bits, and if the downlink transmission modes of the downlink component carriers configured by the base station for the terminal all belong to a transmission mode with only 1 codeword, the bundled ACK/NACK message is 1 bit;

the step of transmitting the bundled ACK/NACK message on the physical uplink control channel appointed by the base station and the terminal comprises: the terminal feeding back the 1-bit or 2-bit bundled ACK/NACK message by using a format 1a or a format 1b.

The above method further comprises:

the terminal not feeding back any information when the terminal detects loss of a physical downlink control channel of a downlink component carrier.

The above method further comprises: the terminal judging whether the loss of the physical downlink control channel of the downlink component carrier occurs according to the downlink assignment information in the received downlink control information of each component carrier.

Wherein, the downlink assignment information is an index of the downlink component carrier assigned in a current sub-frame by the base station to the terminal for scheduling; the physical uplink control channel used by the terminal for feeding back the bundled ACK/NACK message is a physical uplink control channel corresponding to the downlink component carrier with a maximum index of the downlink component carrier indicated by the downlink assignment information detected by the terminal.

Wherein, the downlink assignment information is the number of all downlink component carriers comprising a physical downlink shared channel (PDSCH) which are scheduled by the base station to the terminal in a current sub-frame.

Wherein, the downlink assignment information is indicated using 2 bits in the downlink control information, which comprises four states;

a first state is used to indicate that the number of all downlink component carriers scheduled by the base station to the terminal in the current sub-frame is 1 or 5;

a second state is used to indicate that the number of all downlink component carriers scheduled by the base station to the terminal in the current sub-frame is 2;

a third state is used to indicate that the number of all downlink component carriers scheduled by the base station to the terminal in the current sub-frame is 3;

a fourth state is used to indicate that the number of all downlink component carriers scheduled by the base station to the terminal in the current sub-frame is 4.

Wherein, when the downlink assignment information received by the terminal is the first state and the terminal receives more than one downlink component carrier, the downlink assignment information indicates that the number of all downlink component carriers scheduled by the base station to the terminal in the current sub-frame is 5, otherwise, the number is 1.

The above method further comprises: when the number of all downlink component carriers scheduled by the base station to the terminal in the current sub-frame, which is indicated in the downlink assignment information detected by the terminal, is not equal to the number of downlink component carriers detected actually by the terminal in the current sub-frame, the terminal judging that loss of a physical downlink control channel occurs to a downlink component carrier.

Wherein, when downlink control information received by the terminal comprises downlink assignment information,

in the step of the terminal performing the bundling operation on the ACK/NACK messages of various received downlink component carriers, the bundled ACK/NACK message is 2 bits, and the bundled ACK/NACK message has a mapping relationship with a result of a logical AND operation on the ACK/NACK messages of all component carriers received by the terminal and a maximum value in indices of the downlink component carriers indicated by the downlink assignment information detected by the terminal; the ACK/NACK message of each component carrier is a result after the logical AND operation is performed on ACK/NACK messages of various codewords of that component carrier;

the step of the terminal transmitting the bundled ACK/NACK message on the physical uplink control channel appointed by the base station and the terminal comprises: the terminal feeding back the bundled ACK/NACK message using a format 1b.

Wherein, the bundled ACK/NACK message comprises four states;

a first state is used to indicate that there is a component carrier having a decoding error in all the downlink component carriers received by the terminal or the terminal judges that there is loss of a physical downlink control channel of a downlink component carrier;

a second state is used to indicate that all the downlink component carriers received by the terminal are correctly decoded, and a maximum value in the indices of the downlink component carriers indicated by the downlink assignment information detected by the terminal is 0 or 3;

a third state indicates that all the downlink component carriers received by the terminal are correctly decoded, and a maximum value in the indices of the downlink component carriers indicated by the downlink assignment information detected by the terminal is 1 or 4;

a fourth state indicates that all the downlink component carriers received by the terminal are correctly decoded, and a maximum value in the indices of the downlink component carriers indicated by the downlink assignment information detected by the terminal is 2.

Wherein, when downlink control information received by the terminal comprises downlink assignment information,

in the step of the terminal performing the bundling operation on the ACK/NACK messages of various received downlink component carriers, the bundled ACK/NACK message is 2 bits, the bundled ACK/NACK message has a mapping relationship with the number of former continuous multiple downlink component carriers which are fed back as ACK after the ACK/NACK messages of various component carriers received by the terminal are sequenced according to a certain order, and the ACK/NACK message of each component carrier is a result after a logical AND operation is performed on ACK/NACK messages of various codewords of that component carrier;

the step of the terminal transmitting the bundled ACK/NACK message on the physical uplink control channel appointed by the base station and the terminal comprises: the terminal feeding back the bundled ACK/NACK message using a format 1b.

Wherein, the ACK/NACK messages of various component carriers received by the terminal being sequenced according to a certain order means that the terminal performs sequencing in an ascending order or a descending order according to indices of the downlink component carriers indicated by the received downlink assignment information.

Wherein, the bundled ACK/NACK message comprises four states;

a first state is used to indicate that the number of former continuous multiple downlink component carriers which are fed back as ACK after the ACK/NACK messages of various component carriers received by the terminal are sequenced according to a certain order is 0;

a second state is used to indicate that the number of former continuous multiple downlink component carriers which are fed back as ACK after the ACK/NACK messages of various component carriers received by the terminal are sequenced according to a certain order is 1 or 4;

a third state is used to indicate that the number of former continuous multiple downlink component carriers which are fed back as ACK after the ACK/NACK messages of various component carriers received by the terminal are sequenced according to a certain order is 2 or 5;

a fourth state is used to indicate that the number of former multiple received downlink component carriers which are fed back as ACK after the ACK/NACK messages of various component carriers received by the terminal are sequenced according to a certain order is 3;
or:

a first state is used to indicate that the number of former continuous multiple downlink component carriers which are fed back as ACK after the ACK/NACK messages of various component carriers received by the terminal are sequenced according to a certain order is 1 or 5;

a second state is used to indicate that the number of former continuous multiple downlink component carriers which are fed back as ACK after the ACK/NACK messages of various component carriers received by the terminal are sequenced according to a certain order is 2;

a third state is used to indicate that the number of former continuous multiple downlink component carriers which are fed back as ACK after the ACK/NACK messages of various component carriers received by the terminal are sequenced according to a certain order is 3;

a fourth state is used to indicate that the number of former multiple received downlink component carriers which are fed back as ACK after the ACK/NACK messages of various component carriers received by the terminal are sequenced according to a certain order is 4;

when none of the ACK/NACK messages of various downlink component carriers received by the terminal is fed back as ACK, the terminal does not transmit any information.

Wherein, the downlink assignment information is an index of the downlink component carrier assigned by the base station to the terminal for scheduling in a current sub-frame.

Wherein, the downlink assignment information is indicated using 2 bits in the downlink control information, which comprises four states;
a first state is used to indicate that the index of the downlink component carrier in the scheduled downlink component carriers is 1 or 5; a second state is used to indicate that the index of the downlink component carrier in the scheduled downlink component carriers is 2; a third state is used to indicate that the index of the downlink component carrier in the scheduled downlink component carriers is 3; a fourth state is used to indicate that the index of the downlink component carrier in the scheduled downlink component carriers is 4.

Wherein, when the downlink assignment information received by the terminal is the first state and the terminal receives more than one downlink component carrier, the downlink assignment information indicates that the index of that downlink component carrier in the scheduled downlink component carriers is 5; otherwise, the index of that downlink component carrier in the scheduled downlink component carriers is 1.

The method further comprises: when a maximum value in the indices of the downlink component carriers indicated by the downlink assignment information detected by the terminal is not equal to the number of physical downlink control channels actually detected by the terminal, the terminal judging that loss of a physical downlink control channel occurs to a downlink component carrier.

Wherein, when downlink control information received by the terminal does not comprise downlink assignment information,
in the step of the terminal performing the bundling operation on the ACK/NACK messages of various received downlink component carrier, the bundled ACK/NACK message is 2 bits, and the bundled ACK/NACK message has a mapping relationship with a result of a logical AND operation on the ACK/NACK messages of all the component carriers received by the terminal and the number of ACK messages that are bundled together; the ACK/NACK message of each component carrier is a result after a logical AND operation is performed on ACK/NACK messages of various codewords of that component carrier;
the step of transmitting the bundled ACK/NACK message on the physical uplink control channel appointed by the base station and the terminal comprises: the terminal feeding back the bundled ACK/NACK message using a format 1b.

Wherein, the bundled ACK/NACK message comprises four states;
a first state is used to indicate that there is a component carrier having a decoding error in all the downlink component carriers received by the terminal;
a second state is used to indicate that all the downlink component carriers received by the terminal are correctly decoded, and the number of ACK messages that are bundled together is 1 or 4;
a third state is used to indicate that all the downlink component carriers received by the terminal are correctly decoded, and the number of ACK messages that are bundled together is 2 or 5;
a fourth state is used to indicate that all the downlink component carriers received by the terminal are correctly decoded, and the number of ACK messages that are bundled together is 3.

Wherein, when downlink control information received by the terminal does not comprise downlink assignment information,
in the step of the terminal performing the bundling operation on the ACK/NACK messages of various received downlink component carriers, the bundled ACK/NACK message is 2 bits, and the bundled ACK/NACK message has a mapping relationship with the number of component carriers which are fed back as ACK messages in the ACK/NACK messages of all the component carriers received by the terminal; the ACK/NACK message of each component carrier is a result after a logical AND operation is performed on ACK/NACK messages of various codewords of that component carrier;

the step of the terminal transmitting the bundled ACK/NACK message on the physical uplink control channel appointed by the base station and the terminal comprises: the terminal feeding back the bundled ACK/NACK message using a format 1b.

Wherein, the bundled ACK/NACK message comprises four states;

a first state is used to indicate that there is no downlink component carrier which is fed back as ACK in the ACK/NACK messages of all the downlink component carriers received by the terminal; a second state is used to indicate that the number of downlink component carriers which are fed back as ACK in the ACK/NACK messages of all the downlink component carriers received by the terminal is 1 or 4; a third state is used to indicate that the number of downlink component carriers which are fed back as ACK in the ACK/NACK messages of all the downlink component carriers received by the terminal is 2 or 5; a fourth state is used to indicate that the number of downlink component carriers which are fed back as ACK in the ACK/NACK messages of all the downlink component carriers received by the terminal is 3.

Wherein, when the number of downlink component carriers configured for the terminal is 2, the bundled ACK/NACK message comprises four states;

a first state is used to indicate that the ACK/NACK messages of the 2 downlink component carriers received by the terminal are both NACK; a second state is used to indicate that the ACK/NACK message of a first downlink component carrier received by the terminal is NACK, and the ACK/NACK message of a second downlink component carrier received is ACK; a third state is used to indicate that the ACK/NACK message of a first downlink component carrier received by the terminal is NACK, and the ACK/NACK message of a second downlink component carrier received is ACK; a fourth state is used to indicate that the ACK/NACK messages of the 2 downlink component carriers received by the terminal are both ACK.

Wherein, when the number of downlink component carriers configured for the terminal is 3, the bundled ACK/NACK message comprises four states;

a first state is used to indicate that the terminal receives 1 downlink component carrier which is fed back as ACK and the index of that component carrier is 0 or 2; a second state is used to indicate that the terminal receives 1 downlink component carrier which is fed back as ACK and the index of that downlink component carrier is 1; a third state is used to indicate that the terminal receives 2 downlink component carriers which are fed back as ACK; a fourth state is used to indicate that the ACK/NACK messages of the 3 downlink component carriers received by the terminal are all ACK;

or,

a first state is used to indicate that the terminal receives 1 downlink component carrier which is fed back as ACK and that component carrier is a primary downlink component carrier; a second state is used to indicate that the terminal receives 1 downlink component carrier which is fed back as ACK and that downlink component carrier is a secondary downlink component carrier; a third state is used to indicate that the terminal receives 2 downlink component carriers which are fed back as ACK; a fourth state is used to indicate that the ACK/NACK messages of the 3 downlink component carriers received by the terminal are all ACK.

The above method further comprises: when the terminal does not detect any physical downlink control information in a current sub-frame, the terminal not transmitting any information.

Wherein, the physical uplink control channel used by the terminal to feed back the bundled ACK/NACK message is a physical uplink control channel corresponding to a primary downlink component carrier, or a physical uplink control channel configured by a high layer.

The present invention further provides a terminal, which is configured to:

perform a bundling operation on acknowledgement/negative acknowledgement response (ACK/NACK) messages of various received downlink component carriers, and transmit the bundled ACK/NACK message on a physical uplink control channel appointed by the terminal and a base station.

The terminal is configured to perform the bundling and transmitting operations in the following way when received downlink control information comprises downlink assignment information:

performing a logical AND operation on ACK/NACK messages of codewords corresponding to various received component carriers to obtain the bundled ACK/NACK message; wherein, if a downlink transmission mode of at least one of downlink component carriers configured by the base station for the terminal belongs to a transmission mode comprising 2 codewords, the bundled ACK/NACK message is 2 bits; if downlink transmission modes of the downlink component carriers configured by the base station for the terminal all belong to a transmission mode of only 1 codeword, the bundled ACK/NACK message is 1 bit; and, feeding back the 1-bit or 2-bit bundled ACK/NACK message using a format 1a or a format 1b.

Wherein, when downlink control information received by the terminal comprises downlink assignment information, the bundled ACK/NACK message is 2 bits, and the bundled ACK/NACK message has a mapping relationship with a result of a logical AND operation on the ACK/NACK messages of all the component carriers received by the terminal and a maximum value in indices of the downlink component carriers indicated by the downlink assignment information detected by the terminal; the ACK/NACK message of each component carrier is a result after the logical AND operation is performed on ACK/NACK messages of various codewords of that component carrier; and,

the terminal is configured to transmit the bundled ACK/NACK message on the physical uplink control channel appointed by the base station and the terminal in the following way: feeding back the bundled ACK/NACK message using a format 1b.

Wherein, the bundled ACK/NACK message comprises four states;

a first state is used to indicate that there is a component carrier having a decoding error in all the downlink component carriers received by the terminal or the terminal judges that there is loss of a physical downlink control channel of a downlink component carrier;

a second state is used to indicate that all the downlink component carriers received by the terminal are correctly decoded, and a maximum value in the indices of the downlink component carriers indicated by the downlink assignment information detected by the terminal is 0 or 3;

a third state indicates that all the downlink component carriers received by the terminal are correctly decoded, and a maximum value in the indices of the downlink component carriers indicated by the downlink assignment information detected by the terminal is 1 or 4;

a fourth state indicates that all the downlink component carriers received by the terminal are correctly decoded, and a maximum value in the indices of the downlink component carriers indicated by the downlink assignment information detected by the terminal is 2.

Wherein, when downlink control information received by the terminal comprises downlink assignment information,

the bundled ACK/NACK message is 2 bits, the bundled ACK/NACK message has a mapping relationship with the number of former continuous multiple downlink component carriers which are fed back as ACK after the ACK/NACK messages of various component carriers received by the terminal are sequenced according to a certain order, and the ACK/NACK message of each component carrier is a result after a logical AND operation is performed on ACK/NACK messages of various codewords of that component carrier;

the terminal is configured to transmit the bundled ACK/NACK message on the physical uplink control channel appointed by the base station and the terminal in the following way: feeding back the bundled ACK/NACK message using a format 1b.

Wherein, the bundled ACK/NACK message comprises four states;

a first state is used to indicate that the number of former continuous multiple downlink component carriers which are fed back as ACK after the ACK/NACK messages of various component carriers received by the terminal are sequenced according to a certain order is 0;

a second state is used to indicate that the number of former continuous multiple downlink component carriers which are fed back as ACK after the ACK/NACK messages of various component carriers received by the terminal are sequenced according to a certain order is 1 or 4;

a third state is used to indicate that the number of former continuous multiple downlink component carriers which are fed back as ACK after the ACK/NACK messages of various component carriers received by the terminal are sequenced according to a certain order is 2 or 5;

a fourth state is used to indicate that the number of former multiple received downlink component carriers which are fed back as ACK after the ACK/NACK messages of various component carriers received by the terminal are sequenced according to a certain order is 3;

or:

a first state is used to indicate that the number of former continuous multiple downlink component carriers which are fed back as ACK after the ACK/NACK messages of various component carriers received by the terminal are sequenced according to a certain order is 1 or 5;

a second state is used to indicate that the number of former continuous multiple downlink component carriers which are fed back as ACK after the ACK/NACK messages of various component carriers received by the terminal are sequenced according to a certain order is 2;

a third state is used to indicate that the number of former continuous multiple downlink component carriers which are fed back as ACK after the ACK/NACK messages of various component carriers received by the terminal are sequenced according to a certain order is 3;

a fourth state is used to indicate that the number of former multiple received downlink component carriers which are fed back as ACK after the ACK/NACK messages of various component carriers received by the terminal are sequenced according to a certain order is 4;

the terminal is further configured to: not transmit any information when none of the ACK/NACK messages of various received downlink component carriers is fed back as ACK.

Wherein, when downlink control information received by the terminal does not comprise downlink assignment information,

the bundled ACK/NACK message is 2 bits, and the bundled ACK/NACK message has a mapping relationship with a result of a logical AND operation on the ACK/NACK messages of all the component carriers received by the terminal and the number of ACK messages that are bundled together; the ACK/NACK message of each component carrier is a result after a logical AND operation is performed on ACK/NACK messages of various codewords of that component carrier;

the terminal is configured to transmit the bundled ACK/NACK message on the physical uplink control channel appointed by the base station and the terminal in the following way: feeding back the bundled ACK/NACK message using a format 1b.

Wherein, the bundled ACK/NACK message comprises four states;

a first state is used to indicate that there is a component carrier having a decoding error in all the downlink component carriers received by the terminal;

a second state is used to indicate that all the downlink component carriers received by the terminal are correctly decoded, and the number of ACK messages that are bundled together is 1 or 4;

a third state is used to indicate that all the downlink component carriers received by the terminal are correctly decoded, and the number of ACK messages that are bundled together is 2 or 5;

a fourth state is used to indicate that all the downlink component carriers received by the terminal are correctly decoded, and the number of ACK messages that are bundled together is 3.

Wherein, when downlink control information received by the terminal does not comprise downlink assignment information,

the bundled ACK/NACK message is 2 bits, and the bundled ACK/NACK message has a mapping relationship with the number of component carriers which are fed back as ACK messages in the ACK/NACK messages of all the component carriers received by the terminal; the ACK/NACK message of each component carrier is a result after a logical AND operation is performed on ACK/NACK messages of various codewords of that component carrier;

the terminal is configured to transmit the bundled ACK/NACK message on the physical uplink control channel appointed by the base station and the terminal in the following way: feeding back the bundled ACK/NACK message using a format 1b.

Wherein, the bundled ACK/NACK message comprises four states;

a first state is used to indicate that there is no downlink component carrier which is fed back as ACK in the ACK/NACK messages of all the downlink component carriers received by the terminal; a second state is used to indicate that the number of downlink component carriers which are fed back as ACK in the ACK/NACK messages of all the downlink component carriers received by the terminal is 1 or 4; a third state is used to indicate that the number of downlink component carriers which are fed back as ACK in the ACK/NACK messages of all the downlink component carriers received by the terminal is 2 or 5; a fourth state is used to indicate that the number of downlink component carriers which are fed back as ACK in the ACK/NACK messages of all the downlink component carriers received by the terminal is 3.

Wherein, when the number of downlink component carriers configured for the terminal is 2, the bundled ACK/NACK message comprises four states;

a first state is used to indicate that the ACK/NACK messages of the 2 downlink component carriers received by the terminal are both NACK; a second state is used to indicate that the ACK1NACK message of a first downlink component carrier received by the terminal is NACK, and the ACK/NACK message of a second downlink component carrier received is ACK; a third state is used to indicate that the ACK/NACK message of a first downlink component carrier received by the terminal is NACK, and the ACK/NACK message of a second downlink component carrier received is ACK; a fourth state is used to indicate that the ACK/NACK messages of the 2 downlink component carriers received by the terminal are both ACK.

Wherein, when the number of downlink component carriers configured for the terminal is 3, the bundled ACK/NACK message comprises four states;

a first state is used to indicate that the terminal receives 1 downlink component carrier which is fed back as ACK and the index of that component carrier is 0 or 2; a second state is used to indicate that the terminal receives 1 downlink component carrier which is fed back as ACK and the index of that downlink component carrier is 1; a third state is used to indicate that the terminal receives 2 downlink component carriers which are fed back as ACK; a fourth state is used to indicate that the ACK/NACK messages of the 3 downlink component carriers received by the terminal are all ACK;

or,

a first state is used to indicate that the terminal receives 1 downlink component carrier which is fed back as ACK and that component carrier is a primary downlink component carrier; a second state is used to indicate that the terminal receives 1 downlink component carrier which is fed back as ACK and that downlink component carrier is a secondary downlink component carrier; a third state is used to indicate that the terminal receives 2 downlink component carriers which are fed back as ACK; a fourth state is used to indicate that the ACK/NACK messages of the 3 downlink component carriers received by the terminal are all ACK.

The present invention provides a method for transmitting an ACK/NACK message and a terminal, thereby realizing transmission of the ACK/NACK message in the carrier aggregation system.

Brief Description of Drawings

The accompanying drawings are used to provide further understand of the present invention, constitute a part of the specification, used to explain the present invention in combination with embodiments of the present invention, and do not constitute a limitation to the present invention. In the accompanying drawings:

FIG. 1 is a structure diagram of a basic frame structure in an LTE system according to the related art;

FIG. 2 is a schematic diagram of transmitting an ACK/NACK message according to the present invention;

FIG. 3 is another schematic diagram of transmitting an ACK/NACK message according to the present invention;

FIG. 4 is another schematic diagram of transmitting an ACK/NACK message according to the present invention;

FIG. 5 is another schematic diagram of transmitting an ACK/NACK message according to the present invention;

FIG. 6 is another schematic diagram of transmitting an ACK/NACK message according to the present invention;

FIG. 7 is another schematic diagram of transmitting an ACK/NACK message according to the present invention;

FIG. 8 is another schematic diagram of transmitting an ACK/NACK message according to the present invention;

FIG. 9 is another schematic diagram of transmitting an ACK/NACK message according to the present invention;

FIG. 10 is another schematic diagram of transmitting an ACK/NACK message according to the present invention; and

FIG. 11 is another schematic diagram of transmitting an ACK/NACK message according to the present invention.

Preferred Embodiments of the Present Invention

The core idea of the preset invention is that: a UE performs a bundling operation on an ACK/NACK message of each downlink component carrier, obtains the bundled ACK/NACK message, and transmits the ACK/NACK message on a physical uplink control channel appointed by a base station and the UE.

The bundling operation, the obtained bundled ACK/NACK message and the physical uplink control channel appointed by the base station and the terminal are different under different base station configurations.

Specifically, when the base station adds downlink assignment information (DAI) in downlink control information (DCI), the bundling operation, the obtained bundled ACK/NACK message and the physical uplink control channel appointed by the base station and the terminal can be obtained in one of the following ways.

Way 1-1:

The logical AND operation is performed on the received ACK/NACK message of the codeword corresponding to each component carrier according to the codeword; if a downlink transmission mode of at least one of configured downlink component carriers belongs to a transmission mode x, the UE has to feed back a 2-bit ACK/NACK message, and if downlink transmission modes of the configured downlink component carriers all belong to a transmission mode y, the UE has to feed back a 1-bit ACK/NACK message; and the UE feeds back the 1-bit or 2-bit ACK/NACK message using the format 1a or the format 1b. The transmission mode x is a transmission mode of all the transmission modes comprising 2 codewords; and the transmission mode y is a transmission mode of all the transmission modes only comprising 1 codeword.

Further, the UE does not transmit any information when the UE detects that there is loss of a PDCCH of the downlink component carrier.

Further, the UE can judge whether the loss of the PDCCH of the downlink component carrier occurs by using the DAI information in the received DCI information of the downlink component carrier.

Further, the DAI is an index assigned to a scheduled downlink component carrier by the base station in a current sub-frame.

Further, the DAI is indicated using 2 bits in the DCI, and the 2-bit information have four states, wherein, state 1 is used to indicate that the index of the downlink component carrier in the scheduled downlink component carriers is 1 or 5, which is recorded as $V_{DAI}^{DL}=1$ or 5, state 2 is used to indicate that the index of the downlink component carrier in the scheduled downlink component carriers is 2, which is recorded as $V_{DAI}^{DL}=2$, state 3 is used to indicate that the index of the downlink component carrier in the scheduled downlink component carriers is 3, which is recorded as $V_{DAI}^{DL}=3$, and state 4 is used to indicate that the index of the downlink component carrier in the scheduled downlink component carriers is 4, which is recorded as $V_{DAI}^{DL}=4$.

Further, when the DAI received by the UE is the state 1 and the UE receives more than one downlink component carrier, the DAI indicates that the index of the downlink component carrier in the scheduled downlink component carriers is 5, otherwise, the index is 1.

Further, the indices assigned to the scheduled downlink component carriers by the base station in the current sub-frame are numbered starting from 1.

Further, when the maximum value $V_{DAI,max}^{DL}$ in the indices of the downlink component carriers indicated by the DAI detected by the terminal is not equal to the number $U_{DAI}$ of the physical downlink control channels actually detected by the terminal, the terminal judges that loss of a PDCCH occurs to a certain downlink component carrier.

Further, the PUCCH used by the UE for feeding back the 1-bit or 2-bit information is the PUCCH corresponding to the downlink component carrier with a maximum downlink component carrier index indicated by the DAI detected by the UE; the PUCCH can be obtained in an implicit way, or can be obtained by way of a high layer signaling configuration.

Way 1-2:

The logical AND operation is performed on the ACK/NACK messages of the codewords corresponding to each component carrier according to the codeword; if the downlink transmission mode of at least one of configured downlink component carriers belongs to a transmission mode x, the UE has to feed back a 2-bit ACK/NACK message, and if the downlink transmission modes of the configured downlink component carriers are all a transmission mode y, the UE has to feed back a 1-bit ACK/NACK message; the UE feeds back the 1-bit or 2-bit information using a format 1a or a format 1b.

Further, the transmission mode x is all transmission modes comprising 2 codewords; the transmission mode y is all transmission modes with only 1 codeword.

Further, the UE does not transmit any information when the UE detects loss of a PDCCH of the downlink component carrier.

Further, the terminal can judge whether loss of a PDCCH of the downlink component carrier occurs according to the DAI information in the received DCI information of the downlink component carrier.

Further, the DAI indicates the number of all the downlink component carriers comprising a physical downlink shared channel (PDSCH) that are scheduled to the UE by a current sub-frame.

Further, the DAI is an index assigned to the scheduled downlink component carrier by the base station in a current sub-frame.

Further, the DAI is indicated using 2 bits in the DCI, and the 2-bit information comprises four states, wherein, state 1 is used to indicate that the number of all the downlink component carriers scheduled to the UE by the current sub-frame is 1 or 5, which is recorded as

$V_{DAI}^{DL}=1$ or 5; state 2 is used to indicate that the number of all the downlink component carriers scheduled to the UE by the current sub-frame is 2, which is recorded as

$V_{DAI}^{DL}=2$, state 3 is used to indicate that the number of all the downlink component carriers scheduled to the UE by the current sub-frame is 3, which is recorded as

$V_{DAI}^{DL}=3$, and state 4 is used to indicate that the number of all the downlink component carriers scheduled to the UE by the current sub-frame is 4, which is recorded as

$V_{DAI}^{DL}=4$.

Further, when the DAI received by the UE is the state 1 and the UE receives more than one downlink component carrier, the DAI indicates that the number of all the downlink component carriers scheduled by the current sub-frame to the UE is 5, otherwise, 1.

Further, when the number of all the downlink component carriers scheduled to the UE by the current sub-frame that is indicated by the DAI detected by the UE is not equal to the number of downlink component carriers actually detected by the UE in the current sub-frame, the UE judges that loss of a PDCCH occurs to a downlink component carrier.

Further, the PUCCH used by the UE for feeding back the 1-bit or 2-bit information is the PUCCH corresponding to the primary downlink component carrier, or is a PUCCH configured by a high layer.

Way 1-3:

The bundled ACK/NACK message fed back by the UE is 2 bits, and the bundled ACK/NACK message has a mapping relationship with a result of the logical AND operation on the ACK/NACK messages of all the component carriers received by the UE and a maximum value in the indices of the downlink component carriers indicated by the DAI detected by the UE, and the UE feeds back the bundled ACK/NACK message using a format 1b. The ACK/NACK message of each component carrier is a result of the logical AND operation on the ACK/NACK messages of various codewords of that component carrier.

Further, the 2-bit information comprises four states, wherein, state 1 is used to indicate that there is a component carriers having a decoding error (that is, the corresponding ACK/NACK message is NACK) in all the downlink component carriers received by the UE or the UE judges that there is loss of a PDCCH of a downlink component carrier; state 2 is used to indicate that all the downlink component carriers received by the UE are correctly decoded, and the maximum value in the indices of the downlink component carriers indicated by the DAI detected by the UE is 0 or 3; state 3 is used to indicate that all the downlink component carriers received by the UE are correctly decoded, and the maximum value in the indices of the downlink component carriers indicated by the DAI detected by the UE is 1 or 4; state 4 is used to indicate that all the downlink component carriers received by the UE are correctly decoded, and the maximum value in the indices of the downlink component carriers indicated by the DAI detected by the UE is 2.

Further, the terminal can judge whether loss of a PDCCH of a downlink component carrier occurs by using the DAI information in the received DCI information of the downlink component carrier.

Further, the DAI is indicated using 2 bits in the DCI, and the 2-bit information comprises four states; wherein, state 1 is used to indicate that the index of the downlink component carrier in the scheduled downlink component carriers is 1 or 5, which is recorded as $V_{DAI}^{DL}=1$ or 5, state 2 is used to indicate that the index of the downlink component carrier in the scheduled downlink component carriers is 2, which is recorded as $V_{DAI}^{DL}=2$, state 3 is used to indicate that the index of the downlink component carrier in the scheduled downlink component carriers is 3, which is recorded as $V_{DAI}^{DL}=3$, and state 4 is used to indicate that the index of the downlink component carrier in the scheduled downlink component carriers is 4, which is recorded as $V_{DAI}^{DL}=4$.

Further, when the DAI received by the UE is the state 1 and the UE receives more than one downlink component carrier, the DAI indicates that the index of the downlink component carrier in the scheduled downlink component carriers is 5; otherwise, 1;

Further, the indices of the downlink component carriers scheduled by the base station to the terminal in the current sub-frame are numbered starting from 1.

Further, when the maximum value $V_{DAI,max}^{DL}$ in the indices of the downlink component carriers indicated by the DAI detected by the terminal is not equal to the number $U_{DAI}$ of physical downlink control channels actually detected by the terminal, the terminal judges that loss of a PDCCH occurs to a downlink component carrier.

Further, when the maximum value in the indices of the downlink component carriers indicated by the DAI detected by the terminal is not equal to the number of physical downlink control channels actually detected by the terminal, the terminal judges that loss of a PDCCH occurs to a downlink component carrier.

Further, when the UE does not detect any PDCCH in the current sub-frame, the UE does not transmit any information.

Further, the PUCCH used by the UE for feeding back the 2-bit information is the PUCCH corresponding to the primary downlink component carrier, or is a PUCCH configured by a high layer.

Way 1-4:

The bundled ACK/NACK message fed back by the UE is 2 bits, and the bundled ACK/NACK message has a mapping relationship with the number of former continuous multiple downlink component carriers which are fed back as ACK after the ACK/NACK messages of various component carriers received by the terminal are sequenced according to a certain order, and the UE feeds back the 2-bit bundled ACK/NACK message using a format 1b. The ACK/NACK message of each component carrier is a result of the logical AND operation on the ACK/NACK messages of various codewords of that component carrier.

Further, the ACK/NACK messages of various component carrier received by the UE being sequenced according to a certain order means that the UE performs sequencing in an ascending order or a descending order according to the indices of the downlink component carriers indicated by the received DAI.

Further, the 2-bit information have 4 states, wherein, state 1 is used to indicate that the number of former continuous multiple downlink component carriers which are fed back as ACK after the ACK/NACK messages of various component carriers received by the UE are sequenced according to a certain order is 0, state 2 is used to indicate that the number of former continuous multiple downlink component carriers which are fed back as ACK after the ACK/NACK messages of various component carriers received by the UE are sequenced according to a certain order is 1 or 4, state 3 is used to indicate that the number of former continuous multiple downlink component carriers which are fed back as ACK after the ACK/NACK messages of various component carriers received by the UE are sequenced according to a certain order is 2 or 5, and state 4 is used to indicate that the number of former multiple received downlink component carriers which are fed back as ACK after the ACK/NACK messages of various component carriers received by the UE are sequenced according to a certain order is 3.

Or, state 1 is used to indicate that the number of former continuous multiple downlink component carriers which are fed back as ACK after the ACK/NACK messages of various component carriers received by the terminal are sequenced according to a certain order is 1 or 5, state 2 is used to indicate that the number of former continuous multiple downlink component carriers which are fed back as ACK after the ACK/NACK messages of various component carriers received by the terminal are sequenced according to a certain order is 2, state 3 is used to indicate that the number of former continuous multiple downlink component carriers which are fed back as ACK after the ACK/NACK messages of various component carriers received by the terminal are sequenced according to a certain order is 3, and state 4 is used to indicate that the number of former multiple received downlink component carriers which are fed back as ACK after the ACK/NACK messages of various component carriers received by the terminal are sequenced according to a certain order is 4.

Further, the DAI is indicated using 2 bits in the DCI, and the 2-bit information comprises four states, wherein, state 1 is used to indicate that the index of the downlink component carrier in the scheduled downlink component carriers is 1 or 5, state 2 is used to indicate that the index of the downlink component carrier in the scheduled downlink component carriers is 2, state 3 is used to indicate that the index of the downlink component carrier in the scheduled downlink component carriers is 3, and state 4 is used to indicate that the index of the downlink component carrier in the scheduled downlink component carriers is 4.

Further, when the DAI received by the UE is the state 1 and the UE receives more than one downlink component carrier, the DAI indicates that the index of the downlink component carrier in the scheduled downlink component carriers is 5; otherwise, 1.

Further, the indices assigned to the scheduled downlink component carriers by the base station are numbered starting from 1.

Further, when the maximum number $V_{DAI,\max}^{DL}$ in the indices of the downlink component carriers indicated by the DAI detected by the terminal is not equal to the number $U_{DAI}$ of physical downlink control channels actually detected by the terminal, the terminal judges that loss of a PDCCH occurs to a downlink component carrier.

Further, when the UE does not detect any PDCCH in the current sub-frame, the terminal does not transmit any information.

Further, the PUCCH used by the UE for feeding back the 2-bit information is a PUCCH corresponding to the primary downlink component carrier, or is a PUCCH configured by a high layer.

Or, when the base station does not add DAI in the DCI, the bundling operation, the obtained bundled ACK/NACK message and the physical uplink control channel appointed by the base station and the terminal may be obtained in one of the following ways:

Way 2-1:

The UE feeds back 2-bit information, and the 2-bit information has a mapping relationship with a result of the logical AND operation on the ACK/NACK messages of all the component carriers received by the UE and the number of ACK messages that are bundled together, and the UE feeds back the bundled the 2-bit information using a format 1b. The ACK/NACK message of each component carrier is a result after the logical AND operation is performed on the ACK/NACK messages of various codewords of that component carrier.

Further, the 2-bit information has four states; wherein, state 1 is used to indicate that there is a component carrier having a decoding error in all the downlink component carriers received by the UE, state 2 is used to indicate that all the downlink component carriers received by the UE are correctly decoded, and the number of ACK messages that are bundled together is 1 or 4, state 3 is used to indicate that all the downlink component carriers received by the UE are correctly decoded, and the number of ACK messages that are bundled together is 2 or 5, and state 4 is used to indicate that all the downlink component carriers received by the UE are correctly decoded, and the number of ACK messages that are bundled together is 3.

Further, the UE does not transmit any information when the UE does not detect any PDCCH in the current sub-frame.

Further, the PUCCH used by the UE for feeding back the 2-bit information is a PUCCH corresponding to the primary downlink component carrier, or is a PUCCH configured by a high layer.

Way 2-2:

The UE feeds back 2-bit information, and the 2-bit information has a mapping relationship with the number of component carriers which are fed back as ACK messages in the ACK/NACK messages of all the component carriers received by the UE, and the UE feeds back the 2-bit message using a format 1b. The ACK/NACK message of each component carrier is a result after a logical AND operation is performed on the ACK/NACK messages of various codewords of that component carrier.

Further, the 2-bit information comprises four states; wherein, state 1 is used to indicate that there is no downlink component carrier which is fed back as ACK in the ACK/NACK messages of all the downlink component carriers received by the UE, state 2 is used to indicate that the number of downlink component carriers which are fed back as ACK in the ACK/NACK messages of all the downlink component carriers received by the UE is 1 or 4, state 3 is used to indicate that the number of downlink component carriers which are fed back as ACK in the ACK/NACK messages of all the downlink component carriers received by the UE is 2 or 5, and state 4 is used to indicate that the number of downlink component carriers which are fed back as ACK in the ACK/NACK messages of all the downlink component carriers received by the UE is 3.

Further, the UE does not transmit any information when the UE does not detect any PDCCH in the current sub-frame.

Particularly, when the number of configured downlink component carriers is 2, the 2-bit information comprises four states; wherein, state 1 is used to indicate that the ACK/NACK messages of the 2 downlink component carriers received by the UE are both NACK, state 2 is used to indicate that the ACK/NACK message of a first downlink component carrier received by the UE is NACK, and the ACK/NACK message of a second downlink component carrier received is ACK, state 3 is used to indicate that the ACK/NACK message of a first downlink component carrier received by the UE is NACK, and the ACK/NACK message of a second downlink component carrier received is ACK, and state 4 is used to indicate that the ACK/NACK messages of the 2 downlink component carriers received by the UE are both ACK; and the UE does not transmit any information when the UE does not receive any PDCCH in the current sub-frame.

Further, the index of the downlink component carrier is configured by a high layer signaling.

Particularly, when the number of configured downlink component carriers is 3, the 2-bit information comprises four states; wherein, state 1 is used to indicate that the UE receives 1 downlink component carrier which is fed back as ACK and the index of that component carrier is 0 or 2, state 2 is used to indicate that the UE receives 1 downlink component carrier which is fed back as ACK and the index of that downlink component carrier is 1, state 3 is used to indicate that the UE receives 2 downlink component carriers which are fed back as ACK, and state 4 is used to indicate that the ACK/NACK messages of the 3 downlink component carriers received by the UE are all ACK; and when the UE does not receive any PDCCH in the current sub-frame or the ACK/NACK messages of the 3 received downlink component carriers are all NACK, the UE does not transmit any information.

Further, the index of the downlink component carrier is configured by a high layer signaling.

Or particularly, when the number of configured downlink component carriers is 3, the 2-bit message comprises four states; wherein, state 1 is used to indicate that the UE receives 1 downlink component carrier which is fed back as ACK and that component carrier is a primary downlink component carrier, state 2 is used to indicate that the UE receives 1 downlink component carrier which is fed back as ACK and that downlink component carrier is a secondary downlink component carrier, state 3 is used to indicate that the UE receives 2 downlink component carriers which are fed back as ACK, and state 4 is used to indicate that the ACK/NACK messages of the 3 downlink component carriers received by the UE are all ACK; and when the UE does not receive any PDCCH in the current sub-frame or the ACK/NACK messages of the 3 received downlink component carriers are all NACK, the UE does not transmit any information.

Further, the primary downlink component carrier and the secondary downlink component carrier are configured by the high layer.

Further, the PUCCH used by the UE for feeding back the 2-bit information is a PUCCH corresponding to the primary downlink component carrier, or is a PUCCH configured by a high layer.

The present invention will be described in detail below in combination with the accompanying drawings and embodiments.

Method Embodiments

Embodiment 1

As shown in FIG. 2, in a LTE-Advanced communication system, there is a certain UE having carrier aggregation ability, a base station configures the UE a downlink carrier aggregation set of {DL CC#0, DL CC#1, DL CC#2, DL CC#3} through the high layer signaling, the downlink transmission mode of each downlink component carrier is a non-MIMO mode, and the base station notifies the UE though the high layer signaling to transmit ACK/NACK messages using the bundling way 1-1; it is assumed that there is data in all the DL CC#0/#1/#2/#3 of the base station to schedule to the UE.

In the bundling way 1-1, the DAI is an index assigned to the scheduled downlink component carrier by the base station in the current sub-frame, the DAI is indicated using 2 bits in the DCI, and the four states indicated by the 2-bit information are as follows:

state 1, DAI=(0,0), indicating that the index of the downlink component carrier in the scheduled downlink component carriers is 1 or 5, which is recorded as $V_{DAI}^{DL}=1$ or 5,

state 2, DAI=(0,1), indicating that the index of the downlink component carrier in the scheduled downlink component carriers is 2, which is recorded as $V_{DAI}^{DL}=2,$

state 3, DAI=(1,0), indicating that the index of the downlink component carrier in the scheduled downlink component carriers is 3, which is recorded as $V_{DAI}^{DL}=3,$

state 4, DAI=(1,1), indicating that the index of the downlink component carrier in the scheduled downlink component carriers is 4, which is recorded as $V_{DAI}^{DL}=4.$

When the UE detects that the ACK/NACK messages of DL CC#0/#1/#2/#3 are {ACK, ACK, NACK, ACK} respectively, and the indices of the downlink component carriers indicated by the DAI of DL CC#0/#1/#2/#3 are {1, 2, 3, 4} respectively, since the maximum value in the indices of the downlink component carriers indicated in the DAI is 4 and the number of PDCCHs detected by the UE is also 4, the UE judges according to DAI that there is no downlink component carrier has loss of PDCCH, the UE obtains a 1-bit message b(0) indicated as NACK by performing the logical AND operation on the four ACK/NACK messages, and transmits b(0) by the PUCCH format 1a on the PUCCH corresponding to DL CC#3.

When the UE detects that the ACK/NACK messages of DL CC#0/#1/#2/#3 are {ACK, ACK, ACK, ACK} respectively, and the indices of the downlink component carriers indicated by the DAI of DL CC#0/#1/#2/#3 are {1, 2, 3, 4} respectively, since the maximum value in the indices of the downlink component carriers indicated in the DAI is 4 and the number of PDCCHs detected by the UE is also 4, the UE judges according to DAI that no downlink component carrier has loss of PDCCH; the UE obtains a 1-bit message b(0) indicated as ACK by performing the logical AND operation on the four ACK/NACK messages, and transmits b(0) by the PUCCH format 1a on the PUCCH corresponding to DL CC#3.

When the UE only detects DL CC#0/#1/#3, and the indices of the downlink component carriers indicated by the DAI of DL CC#0/#1/#3 are {1, 2, 4} respectively, since the maximum value in the indices of the downlink component carriers indicated in the DAI is 4 but the number of PDCCHs detected by the UE is 3, that is, both of them are not equal, the UE can judge according to the DAI information that the PDCCH of the downlink component carrier of which the index of the downlink component carrier indicated by the DAI is 3 is lost, and thus the UE does not transmit any information.

When the UE detects that the ACK/NACK messages corresponding to DL CC#0/#1/#2 are {ACK, ACK, ACK} respectively, and the indices of the downlink component carriers indicated by the DAI of DL CC#0/#1/#2 are {1, 2, 3} respectively, since the maximum value in the indices of the downlink component carriers indicated in the DAI is 3 and the number of PDCCHs detected by the UE is also 3, the UE cannot judge according to the DAI in the DCI of DL CC#0/#1/#2 that there is the loss of the PDCCH of the downlink component carrier; so, the UE obtains a 1-bit message b(0) indicated as ACK by performing the logical AND operation on the three ACK/NACK messages, and meanwhile, since DL CC#2 is the one that the index of the downlink component carrier indicated by the DAI in all the detected downlink component carriers is maximum, the UE transmits b(0) by the PUCCH format 1a on the PUCCH corresponding to DL CC#2; for this case, the PUCCH used by the UE is not consistent with the channel which the base station assumes that the UE uses (in which the base station assumes that the UE uses the PUCCH corresponding to the downlink component carrier #3 to transmit the ACK/NACK), therefore the base station can judge that the UE has the loss of PDCCH in DL CC#3 by performing the related detection on the PUCCH.

Embodiment 2

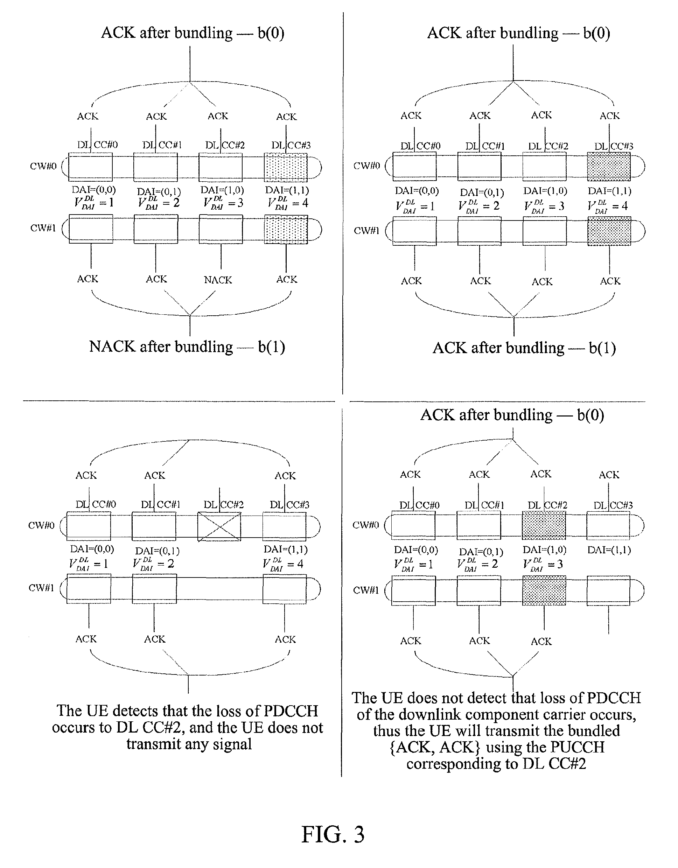

As shown in FIG. 3, in a LTE-Advanced communication system, there is a certain UE having carrier aggregation ability, a base station notifies the UE that a downlink carrier aggregation set is {DL CC#0, DL CC#1, DL CC#2, DL CC#3} through the high layer signaling, the downlink transmission mode of each downlink component carrier is a MIMO mode, and the base station notifies the UE though high layer signaling to transmit ACK/NACK messages using the bundling way 1-1; and it is assumed that all the DL CC#0/#1/#2/#3 of the base station have data to schedule to the UE.

When the UE detects that the ACK/NACK messages of the first codeword of DL CC#0/#1/#2/#3 are {ACK, ACK, NACK, ACK} respectively, the ACK/NACK messages of the second codeword are {ACK, ACK, ACK, ACK} respectively, and the indices of the downlink component carriers indicated by the DAI of DL CC#0/#1/#2/#3 are {1, 2, 3, 4} respectively, since the index of the downlink component carrier indicated in the DAI is 4 and the number of PDCCHs detected by the UE is also 4, the UE judges according to DAI that no downlink component carrier has loss of PDCCH; the UE obtains a 2-bit message b(0)b(1) indicated as {NACK, ACK} by performing the logical AND operation on the four ACK/NACK messages corresponding to each codeword respectively, and transmits b(0)b(1) by the PUCCH format 1b on the PUCCH corresponding to DL CC#3.

When the UE detects that the ACK/NACK messages of the first codeword of DL CC#0/#1/#2/#3 are {ACK, ACK, ACK, ACK} respectively, the ACK/NACK messages of the second codewords are {ACK, ACK, ACK, ACK}, and the indices of the downlink component carriers indicated by the DAI of DL CC#0/#1/#2/#3 are {1, 2, 3, 4} respectively, since the maximum value in the indices of the downlink component carriers indicated in the DAI is 4 and the number of PDCCHs detected by the UE is also 4, the UE judges according to DAI that no downlink component carrier has loss of PDCCH; the UE obtains a 2-bit message b(0)b(1) indicated as {ACK, ACK} by performing the logical AND operation on the four ACK/NACK messages corresponding to each codeword respectively, and transmits b(0)b(1) by the PUCCH format 1b on the PUCCH corresponding to DL CC#3.

When the UE only detects DL CC#0/#1/#3 and the indices of the downlink component carrier indicated by the DAI of DL CC#0/#1/#3 are {1, 3, 4} respectively, since the index of the downlink component carrier indicated in the DAI is 4 but the number of PDCCHs detected by the UE is 3, the UE judges according to DAI that the loss of PDCCH of a certain downlink component carrier occurs, and thus the UE does not transmit any information.

When the UE only detects DL CC#0/#1/#2, the ACK/NACK messages of the first codeword are {ACK, ACK, ACK,} respectively, the ACK/NACK messages of the second codeword are {ACK, ACK, ACK,}, and the indices of the downlink component carriers indicated by the DAI of DL CC#0/#1/#2 are {1, 2, 3} respectively, since the maximum value in the indices of the downlink component carrier indicated in the DAI is 3 and the number of PDCCHs detected by the UE is 3, the UE does not judge according to DAI that there is a certain downlink component carrier has loss of PDCCH; so, the UE obtains a 2-bit message b(0)b(1) indicated as {ACK, ACK} by performing the logical AND operation on the 3 ACK/NACK messages, and meanwhile, since DL CC#2 is the one that the index of the downlink component carrier indicated by the DAI in all the detected downlink component carriers is maximum, the UE transmits b(0) by the PUCCH format 1a on the PUCCH corresponding to DL CC#2; for this case, since the PUCCH used by the UE is not consistent with the channel which the base station assumes that the UE uses, the base station can judge that the UE has the loss of PDCCH in DL CC#3 by performing the related detection on the PUCCH.

Embodiment 3

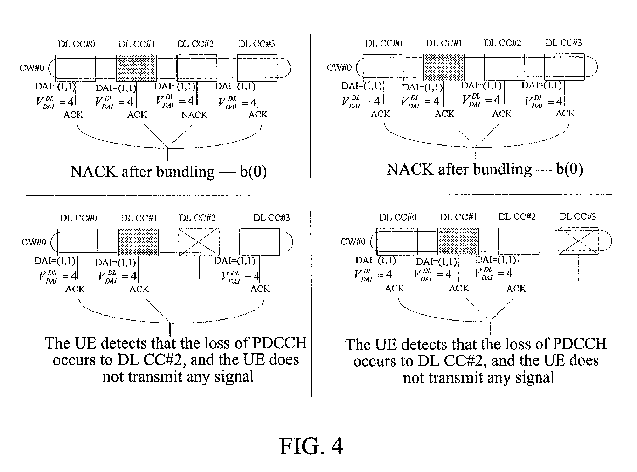

As shown in FIG. 4, in a LTE-Advanced communication system, there is a certain UE having carrier aggregation ability, a base station notifies the UE that a downlink carrier aggregation set is {DL CC#0, DL CC#1, DL CC#2, DL CC#3} through the high layer signaling, the downlink transmission mode of each downlink component carrier is a non-MIMO mode, and the base station notifies the UE though the high layer signaling to transmit ACK/NACK messages using the bundling way 1-2; and it is assumed that all the DL CC#0/#1/#2/#3 of the base station have data to schedule to the UE, and additionally it is assumed that DL CC#1 is a primary downlink component.

In the bundling way 1-1, the DAI is the number of all the downlink component carriers scheduled by the base station to the UE in the current sub-frame, the DAI is indicated using 2 bits in the DCI, and the four states indicated by the 2-bit information are as follows:

state 1, DAI=(0,0), indicating that the number of all the downlink component carriers scheduled to the UE in the current sub-frame is 1 or 5, which is recorded as $V_{DAI}^{DL}=1$ or 5;

state 2, DAI=(0,1), indicating that the number of all the downlink component carriers scheduled to the UE in the current sub-frame is 2, which is recorded as $V_{DAI}^{DL}=2$;

state 3, DAI=(1,0), indicating that the number of all the downlink component carriers scheduled to the UE in the current sub-frame is 3, which is recorded as $V_{DAI}^{DL}=3$;

state 4, DAI=(1,1), indicating that the number of all the downlink component carriers scheduled to the UE in the current sub-frame is 4, which is recorded as $V_{DAI}^{DL}=4$.

When the UE detects that the ACK/NACK messages of DL CC#0/#1/#2/#3 are {ACK, ACK, NACK, ACK} respectively, the UE obtains a 1-bit message b(0) indicated as NACK by performing the logical AND operation on the four ACK/NACK messages; and since the number of the downlink component carriers detected by the UE is identical with the information indicated by the DAI domain in DCI of the downlink component carriers, i.e., both of them are 4, the UE transmits b(0) by the PUCCH format l a on the PUCCH corresponding to the primary carrier DLCC#1.

When the UE detects that the ACK/NACK messages of DL CC#0/#1/#2/#3 are {ACK, ACK, ACK, ACK} respectively, the UE obtains a 1-bit message b(0) indicated as ACK by performing the logical AND operation on the four ACK/NACK messages; and since the number of the downlink component carriers detected by the UE is identical with the information indicated by the DAI domain in DCI of the downlink component carriers, i.e., both of them are 4, the UE transmits b(0) by the PUCCH format 1a on the PUCCH corresponding to the primary carrier DLCC#1.

When the UE only detects DL CC#0/#1/#3, since the number of the downlink component carriers detected by the UE is not identical with the information indicated by the DAI domain in DCI of the downlink component carriers, that is, one is 4 while the other is 3, the UE judges that the PDCCH of a certain downlink component carrier is lost, and the UE does not transmit any information.

When the UE only detects DL CC#0/#1/#2, since the number of the downlink component carriers detected by the UE is not identical with the information indicated by the DAI domain in DCI of the downlink component carriers, that is, one is 4 while the other is 3, the UE judges that the PDCCH of a certain downlink component carrier is lost, and the UE does not transmit any information.

It can be seen by comparing embodiments 1/2 and 3 that, when the DAI indicates the index assigned by the base station to the scheduled downlink component carrier in the current sub-frame, the UE cannot judge all the cases of loss of PDCCH of the downlink component carrier, so, the PUCCH used for feeding back the bundled b(0) or b(0)b(1) needs to be associated with the PUCCH corresponding to the downlink component carrier with the maximum index of the downlink component carrier indicated by the detected DAI in all the detected downlink component carriers, so that the base station judges whether the loss of PDCCH occurs to the UE. When the DAI indicates the number of all the downlink component carriers scheduled to the UE in the current sub-frame, the UE can judge the loss of any downlink component carrier.

Embodiment 4

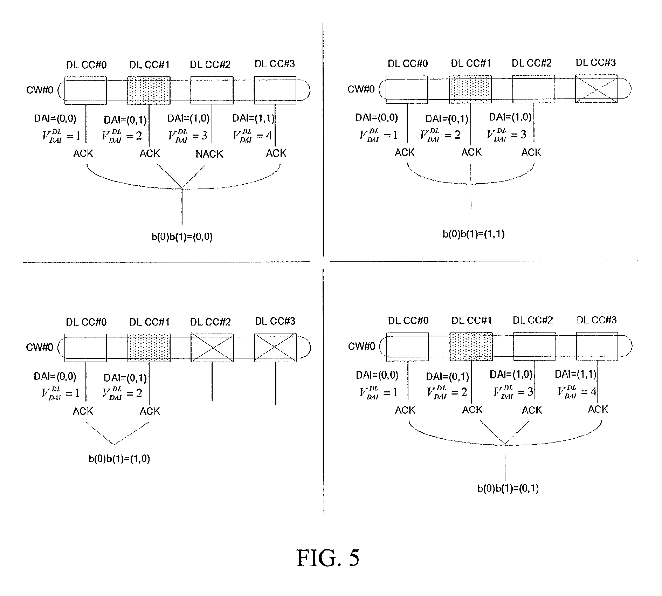

As shown in FIG. 5, in a LTE-Advanced communication system, there is a certain UE having carrier aggregation ability, a base station notifies the UE that a downlink carrier aggregation set is {DL CC#0, DL CC#1, DL CC#2, DL CC#3} through the high layer signaling, the downlink transmission mode of each downlink component carrier is a non-MIMO mode, and the base station notifies the UE though the high layer signaling to transmit ACK/NACK messages using the bundling way 1-3; and it is assumed that all the DL CC#0/#1/#2/#3 of the base station have data to schedule to the UE, and additionally, it is assumed that DL CC#1 is a primary downlink component carrier.

In the bundling way 1-3, the DAI is an index assigned to the downlink component carrier by the base station in the current sub-frame, the DAI is indicated using 2 bits in the DCI, and the four states indicated by the 2-bit information are as follows:

state 1, DAI=(0,0), indicating that the index of the downlink component carrier in the scheduled downlink component carriers is 1 or 5, which is recorded as $V_{DAI}^{DL}=1$ or 5;

state 2, DAI=(0,1), indicating that the index of the downlink component carrier in the scheduled downlink component carriers is 2, which is recorded as

$V_{DAI}^{DL}=2$;

state 3, DAI=(1,0), indicating that the index of the downlink component carrier in the scheduled downlink component carriers is 3, which is recorded as

$V_{DAI}^{DL}=3$;

state 4, DAI=(1,1), indicating that the index of the downlink component carrier in the scheduled downlink component carriers is 4, which is recorded as

$V_{DAI}^{DL}=4$.

Meanwhile, it is assumed that in the bundling way 1-3, the meanings of the four states of the 2-bit information fed back by the UE are as follows:

state 1, b(0)b(1)=(0, 0), indicating that there is a component carrier having a decoding error in all downlink component carriers received by the UE (that is, the corresponding ACK/NACK message is NACK) or the UE judges that there is loss of a PDCCH of the downlink component carrier;

state 2, b(0)b(1)=(0, 1), indicating that all the downlink component carriers received by the UE are correctly decoded, and the maximum value in the indices of the downlink component carriers indicated by the DAI detected by the UE is 1 or 4;

state 3, b(0)b(1)=(1, 0), indicating that all the downlink component carriers received by the UE are correctly decoded, and the maximum value in the indices of the downlink component carriers indicated by the DAI detected by the UE is 2 or 5;

state 4, b(0)b(1)=(1, 1), indicating that all the downlink component carriers received by the UE are correctly decoded, and the maximum value in the indices of the downlink component carriers indicated by the DAI detected by the UE is 3.

When the UE receives four downlink component carriers of {DL CC#0, DL CC#1, DL CC#2, DL CC#3}, and the indices of the downlink component carriers indicated by the DAI of DL CC#0/#1/#2/#3 are {1, 2, 3, 4} respectively, and when the corresponding ACK/NACK messages are {ACK, ACK, NACK, ACK} respectively, since the maximum value of the indices of the downlink component carriers indicated by the DAI is 4, and the number of PDCCHs detected by the UE is also 4, the UE judges according to DAI that no downlink component carrier has loss of PDCCH; and since the feedback state of DL CC#2 is NACK, the UE transmits b(0)b(1)=(0, 0) by the PUCCH format 1b on the PUCCH corresponding to the primary carrier DL CC#1.

When the UE receives three downlink component carriers of {DL CC#0, DL CC#1, DL CC#2}, and the indices of the downlink component carriers indicated by the DAI of DL CC#0/#1/#2 are {1, 2, 3} respectively, the corresponding ACK/NACK messages are {ACK, ACK, ACK}; since the maximum value in the indices of the downlink component carriers indicated by the DAI detected by the UE is 3, the UE transmits b(0)b(1)=(1, 1) by the PUCCH format 1b on the PUCCH corresponding to the primary carrier DL CC#1.

When the UE receives two downlink component carriers of {DL CC#0, DL CC#1}, and the indices of the downlink component carriers indicated by the DAI of DL CC#0/#1 are {1, 2} respectively, the corresponding ACK/NACK messages are {ACK, ACK }; since the maximum value in the indices of the downlink component carriers indicated by the DAI detected by the UE is 2, the UE transmits b(0)b(1)=(1, 0) by the PUCCH format 1b on the PUCCH corresponding to the primary carrier DL Cm#1.

When the UE receives four downlink component carriers of {DL CC#0, DL CC#1, DL CC#2, DL CC#3}, and the indices of the downlink component carriers indicated by the DAI of DL CC#0/#1/#2/#3 are {1, 2, 3, 4} respectively, the corresponding ACK/NACK messages are {ACK, ACK, ACK, ACK}; since the maximum value in the indices of the downlink component carriers indicated by the DAI detected by the UE is 4, the UE transmits b(0)b(1)=(0, 1) by the PUCCH format 1b on the PUCCH corresponding to the primary carrier DL CC#1.

Embodiment 5

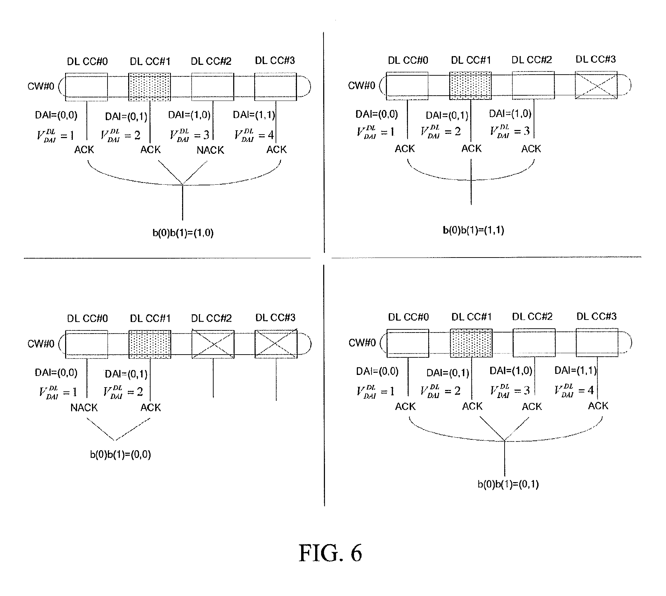

As shown in FIG. 6, in a LTE-Advanced communication system, there is a certain UE having carrier aggregation ability, a base station notifies the UE that a downlink carrier aggregation set is {DL CC#0, DL CC#1, DL CC#2, DL CC#3} through the high layer signaling, the downlink transmission mode of each downlink component carrier is a non-MIMO mode, and the base station notifies the UE though the high layer signaling to transmit ACK/NACK messages in the bundling way 1-4; and it is assumed that all the DL CC#0/#1/#2/#3 of the base station have data to schedule to the UE, and additionally, it is assumed that DL CC#1 is a primary downlink component carrier.

In the bundling way 1-4, the DAI is an index assigned to the scheduled downlink component carrier by the base station in the current sub-frame, the DAI is indicated using 2 bits in the DCI, and the four states indicated by the 2-bit information are as follows:

state 1, DAI=(0, 0), indicating that the index of the downlink component carrier in the scheduled downlink component carriers is 1 or 5, which is recorded as $V_{DAI}^{DL}=1$ or 5;

state 2, DAI=(0, 1), indicating that the index of the downlink component carrier in the scheduled downlink component carriers is 2, which is recorded as $V_{DAI}^{DL}=2$;

state 3, DAI=(1, 0), indicating that the index of the downlink component carrier in the scheduled downlink component carriers is 3, which is recorded as $V_{DAI}^{DL}=3$;

state 4, DAI=(1, 1), indicating that the index of the downlink component carrier in the scheduled downlink component carriers is 4, which is recorded as $V_{DAI}^{DL}=4$.

Meanwhile, it is assumed that in the bundling way 1-4, the ACK/NACK messages received by the UE are sequenced from small to large according to the indices of the downlink component carriers indicated by the received DAI, and the meanings of the four states of the 2-bit information fed back by the UE are as follows:

state 1, b(0)b(1)=(0, 0), indicating that the number of former continuous multiple downlink component carriers that are fed back as ACK after the ACK/NACK messages received by the UE are sequenced in the above order is 0;

state 2, b(0)b(1)=(0, 1), indicating that the number of former continuous multiple downlink component carriers that are fed back as ACK after the ACK/NACK messages received by the UE are sequenced in the above order is 1 or 4;

state 3, b(0)b(1)=(1, 0), indicating that the number of former continuous multiple downlink component carriers that are fed back as ACK after the ACK/NACK messages received by the UE are sequenced in the above order is 2 or 5;

state 4, b(0)b(1)=(1, 1), indicating that the number of former continuous multiple downlink component carriers that are fed back as ACK after the ACK/NACK messages received by the UE are sequenced in the above order is 3.

When the UE receives four downlink component carriers of {DL CC#0, DL CC#1, DL CC#2, DL CC#3}, and the indices of the downlink component carriers indicated by the DAI of DL CC#0/#1/#2/#3 are {1, 2, 3, 4} respectively, and when the corresponding ACK/NACK messages are {ACK, ACK, NACK, ACK} respectively, since the maximum value of the indices of the downlink component carriers indicated by the DAI is 4, and the number of PDCCHs detected by the UE is also 4, the UE judges according to DAI that no downlink component carrier has loss of PDCCH; and after the received ACK/NACK signals are sequenced according to the downlink component carriers indicated by the DAI, the number of former continuous downlink component carriers which are fed back as ACK is 2, so the UE transmits b(0)b(1)=(1, 0) by the PUCCH format 1b on the PUCCH corresponding to the primary carrier DL CC#1.

When the UE receives three downlink component carriers of {DL CC#0, DL CC#1, DL CC#2}, and the indices of the downlink component carriers indicated by the DAI of DL CC#0/#1/#2 are {1, 2, 3} respectively, the corresponding ACK/NACK messages are {ACK, ACK, ACK}; since the maximum value of the indices of the downlink component carriers indicated by the DAI is 3, and the number of PDCCHs detected by the UE is also 3, the UE judges according to DAI that no downlink component carrier has loss of PDCCH; and after the received ACK/NACK signals are sequenced according to the downlink component carriers indicated by the DAI, the number of former continuous downlink component carriers which are fed back as ACK is 3, so the UE transmits b(0)b(1)= (1, 1) by the PUCCH format 1b on the PUCCH corresponding to the primary carrier DL CC#1.

When the UE receives two downlink component carriers of {DL CC#0, DL CC#1}, and the indices of the downlink component carriers indicated by the DAI of DL CC#0/#1 are {1, 2} respectively, the corresponding ACK/NACK messages are {NACK, ACK}; since the maximum value of the indices of the downlink component carriers indicated by the DAI is 2, and the number of PDCCHs detected by the UE is also 2, the UE judges according to DAI that no downlink component carrier has loss of PDCCH, and after the ACK/NACK signals are sequenced according to the downlink component carriers indicated by the DAI, the number of former continuous downlink component carriers which are fed back as ACK is 0, so the UE transmits b(0)b(1)=(0, 0) by the PUCCH format 1b on the PUCCH corresponding to the primary carrier DL CC#1.

When the UE receives four downlink component carriers of DL CC#0, DL CC#1, DL CC#2, DL CC#3}, and the indices of the downlink component carriers indicated by the DAI of DL CC#0/#1/#2/#3 are {1, 2, 3, 4} respectively, the corresponding ACK/NACK messages are {ACK, ACK, ACK, ACK}; since the maximum value of the indices of the downlink component carriers indicated by the DAI is 4, and the number of PDCCHs detected by the UE is also 4, the UE judges according to DAI that no downlink component carrier has loss of PDCCH; and after the ACK/NACK signals are sequenced according to the downlink component carriers indicated by the DAI, the number of former continuous downlink component carriers which are fed back as ACK is 4, so the UE transmits b(0)b(1)= (0, 1) by the PUCCH format 1b on the PUCCH corresponding to the primary carrier DL CC#1.

It can be seen by comparing the embodiment 5 with the previous embodiment 1/2/3/4 that, in the embodiment 5, since the UE feeds back the number of the former downlink component carriers correctly received after the ACK/NACK messages are sequenced in a certain order, the base station is only able to need to retransmit the subsequent erroneous or lost downlink component carrier(s) according to the feedback of the UE. Therefore, in consideration of a perspective of performance of system throughput, the bundling way 1-4 has a certain advantage over other schemes.

Embodiment 6

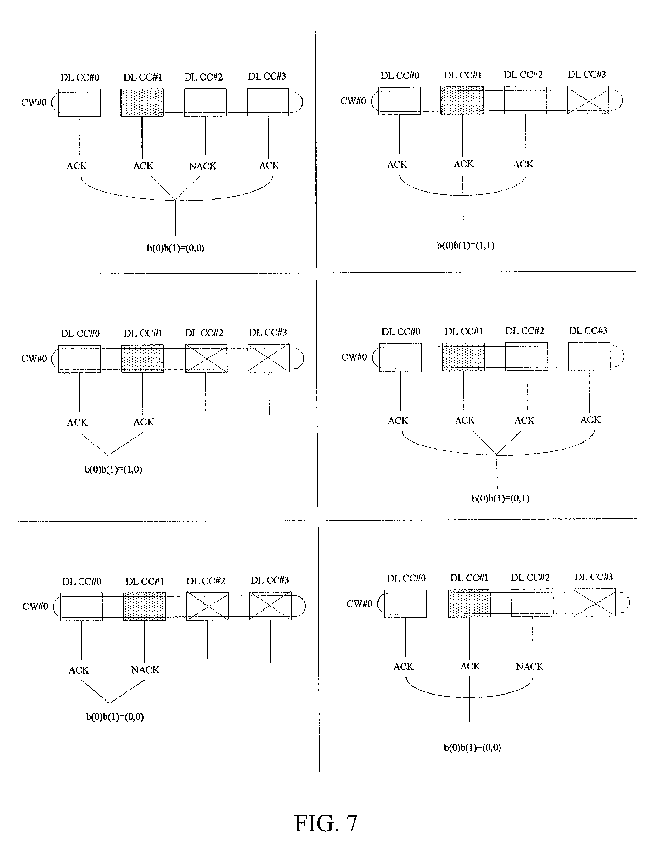

As shown in FIG. 7, in a LTE-Advanced communication system, there is a certain UE having carrier aggregation ability, a base station notifies the UE that a downlink carrier aggregation set is {DL CC#0, DL CC#1, DL CC#2, DL CC#3} through the high layer signaling, the downlink transmission mode of each downlink component carrier is a non-MIMO mode, and the base station notifies the UE though the high layer signaling to transmit ACK/NACK messages using the bundling way 2-1; and it is assumed that all DL CC#0/#1/#2/#3 of the base station have data to schedule to the UE, and additionally, it is assumed that DL CC#1 is a primary downlink component carrier.

Meanwhile, it is assumed that in the bundling way 2-1, the meanings of the four states of the 2-bit information fed back are as follows:

state 1, b(0)b(1)=(0,0), indicating that there is a component carrier having a decoding error in all the downlink component carriers received by the UE (that is, the corresponding ACK/NACK message is NACK);

state 2, b(0)b(1)=(0,1), indicating that all the downlink component carriers received by the UE are correctly decoded, and the number of ACK messages that are bundled together is 1 or 4;

state 3, b(0)b(1)=(1,0), indicating that all the downlink component carriers received by the UE are correctly decoded, and the number of ACK messages that are bundled together is 2 or 5;

state 4, b(0)b(1)=(1,1), indicating that all the downlink component carriers received by the UE are correctly decoded, and the number of ACK messages that are bundled together is 3.

When the UE receives four downlink component carriers, and the corresponding ACK/NACK messages are {ACK, ACK, NACK, ACK} respectively, since the feedback state of the downlink component carrier of DL CC#2 is NACK, the UE transmits the 2-bit information b(0)b(1)=(0,0) by the PUCCH format 1b on the PUCCH corresponding to the primary carrier DL CC#1.

When the UE receives three downlink component carriers, and the corresponding ACK/NACK messages are all ACK, the UE transmits the 2-bit information b(0)b(1)=(1,1) by the PUCCH format 1b on the PUCCH corresponding to the primary carrier DL CC#1.

When the UE receives two downlink component carriers, and the corresponding ACK/NACK messages are all ACK, the UE transmits the 2-bit information b(0)b(1)=(1,0) by the PUCCH format 1b on the PUCCH corresponding to the primary carrier DL CC#1.

When the UE receives four downlink component carriers, and the corresponding ACK/NACK messages are all ACK, the UE transmits the 2-bit information b(0)b(1)=(0,1) by the PUCCH format 1b on the PUCCH corresponding to the primary carrier DL CC#1.

When the UE receives two downlink component carriers, and the corresponding ACK/NACK messages are {ACK, NACK}, since the feedback state of DL CC#1 is NACK, the UE transmits the 2-bit information b(0)b(1) =(0,0) by the PUCCH format 1b on the PUCCH corresponding to the primary carrier DL CC#1.

When the UE receives three downlink component carriers, and the corresponding ACK/NACK messages are {ACK, NACK, ACK} respectively, since the feedback state of DL CC#1 is NACK, the UE transmits b(0)b(1)=(0,0) by the PUCCH format 1b on the PUCCH corresponding to the primary carrier DL CC#1.

Embodiment 7

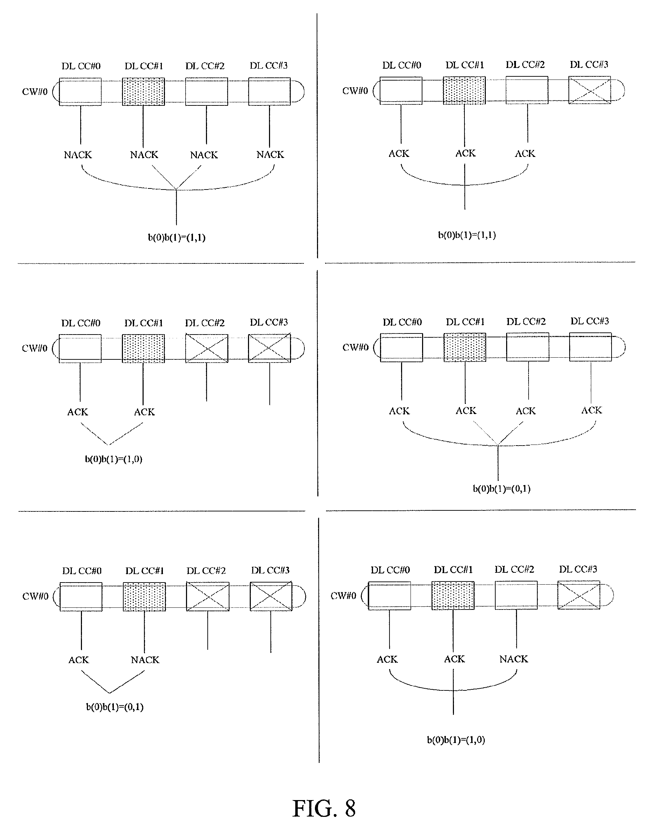

As shown in FIG. 8, in a LTE-Advanced communication system, there is a certain UE having carrier aggregation ability, a base station notifies the UE that a downlink carrier aggregation set is {DL CC#0, DL CC#1, DL CC#2, DL CC#3} through the high layer signaling, the downlink transmission mode of each downlink component carrier is a non-MIMO mode, and the base station notifies the UE though the high layer signaling to transmit ACK/NACK messages using the bundling way 2-2; and it is assumed that all the DL CC#0/#1/#2/#3 of the base station have data to schedule to the UE, and additionally, it is assumed that DL CC#1 is a primary downlink component carrier.

Meanwhile, it is assumed that in the bundling way 2-2, the meanings of the four states of the 2-bit information fed back are as follows:

state 1, b(0)b(1)=(0,0), indicating that there is no downlink component carrier which is fed back as ACK in the ACK/NACK messages of all the downlink component carriers received by the UE;

state 2, b(0)b(1)=(0,1), indicating that the number of downlink component carriers which are fed back as ACK in the ACK/NACK messages of all the downlink component carriers received by the UE is 1 or 4;

state 3, b(0)b(1)=(1,0), indicating that the number of downlink component carriers which are fed back as ACK in the ACK/NACK messages of all the downlink component carriers received by the UE is 2 or 5;

state 4, b(0)b(1)=(1,1), indicating that the number of downlink component carriers which are fed back as ACK in the ACK/NACK messages of all the downlink component carriers received by the UE is 3.

When the UE receives four downlink component carriers, and the corresponding ACK/NACK messages are {ACK, ACK, NACK, ACK} respectively, wherein the number of downlink component carriers which are fed back as ACK is 3, the UE transmits the 2-bit information b(0)b(1)=(1,1) by the PUCCH format 1b.

When the UE receives three downlink component carriers, and the corresponding ACK/NACK messages are all ACK, wherein the number of downlink component carriers which are fed back as ACK is 3, the UE transmits the 2-bit information b(0)b(1)=(1,1) by the PUCCH format 1b on the PUCCH corresponding to the primary carrier DL CC#1.

When the UE receives two downlink component carriers, and the corresponding ACK/NACK messages are all ACK, wherein the number of downlink component carriers which are fed back as ACK is 2, the UE transmits the 2-bit information b(0)b(1)=(1,0) by the PUCCH format 1b on the PUCCH corresponding to the primary carrier DL CC#1.

When the UE receives four downlink component carriers, and the corresponding ACK/NACK messages are all ACK, wherein the number of downlink component carriers which are fed back as ACK is 4, the UE transmits the 2-bit information b(0)b(1)=(0,1) by the PUCCH format 1b on the PUCCH corresponding to the primary carrier DL CC#1.

When the UE receives two downlink component carriers, and the corresponding ACK/NACK messages are {ACK, NACK}, wherein the number of downlink component carriers which are fed back as ACK is 1, the UE transmits the 2-bit information b(0)b(1)=(0,1) by the PUCCH format 1b on the PUCCH corresponding to the primary carrier DL CC#1.

When the UE receives three downlink component carriers, and the corresponding ACK/NACK messages are {ACK, NACK, ACK} respectively, wherein the number of downlink component carriers which are fed back as ACK is 2, the UE transmits the 2-bit information b(0)b(1)=(1,0) by the PUCCH format 1b on the PUCCH corresponding to the primary carrier DL CC#1.

Embodiment 8

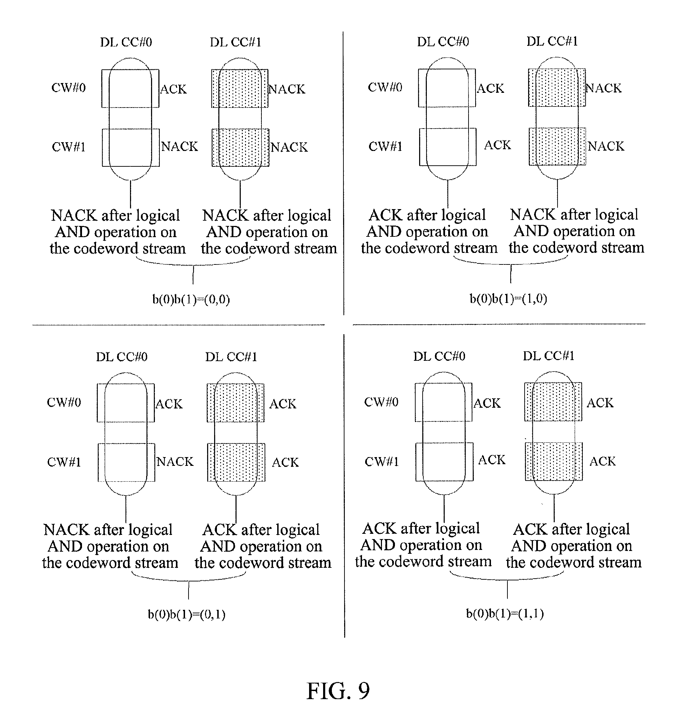

As shown in FIG. 9, in a LTE-Advanced communication system, there is a certain UE having carrier aggregation ability, a base station notifies the UE that a downlink carrier aggregation set is {DL CC#0, DL CC#1} through the high layer signaling, the downlink transmission mode of each downlink component carrier is a MIMO mode, and the base station notifies the UE though the high layer signaling to transmit ACK/NACK messages in the bundling way 2-2; and it is assumed that all the DL CC#0/#1 of the base station have data to schedule to the UE, and additionally, it is assumed that DL CC#1 is a primary downlink component carrier.

Meanwhile, it is assumed that in the bundling way 2-2, the meanings of the four states of the 2-bit information fed back are as follows:

state 1, b(0)b(1)=(0,0), indicating that both the ACK/NACK messages of the 2 downlink component carriers received by the UE are NACK;

state 2, b(0)b(1)=(0,1), indicating that the ACK/NACK message of a first downlink component carrier received by the UE is NACK, and the ACK/NACK message of a second received downlink component carrier is ACK, or the PDCCH of the second downlink component carrier is not received;

state 3, b(0)b(1)=(1,0), indicating that the ACK/NACK message of a first downlink component carrier received by the UE is ACK, , or the PDCCH of the first downlink component carrier is not received, and the ACK/NACK message of a received second downlink component carrier is NACK;

state 4, b(0)b(1)=(1,1), indicating that both the ACK/NACK messages of the 2 downlink component carriers received by the UE are ACK.

When the UE receives two downlink component carriers, and the ACK/NACK messages of each component carrier are {NACK,NACK} after bundling with the codeword, the UE transmits the 2-bit information b(0)b(1)=(0,0) by the PUCCH format 1b on the PUCCH corresponding to the primary carrier DL CC#1.

When the UE receives two downlink component carriers, and the ACK/NACK messages of each component carrier are {NACK, ACK} after bundling with the codeword, the UE transmits the 2-bit information b(0)b(1)=(0,1) by the PUCCH format 1b on the PUCCH corresponding to the primary carrier DL CC#1.

When the UE receives two downlink component carriers, and the ACK/NACK messages of each component carrier are {ACK, NACK} after bundling with the codeword, the UE transmits the 2-bit information b(0)b(1)=(1,0) by the PUCCH format 1b on the PUCCH corresponding to the primary carrier DL CC#1.

When the UE receives two downlink component carriers, and the ACK/NACK messages of each component carrier are {ACK, ACK} after bundling with the codeword, the UE transmits the 2-bit information b(0)b(1)=(1,1) by the PUCCH format 1b on the PUCCH corresponding to the primary carrier DL CC#1.

Embodiment 9,

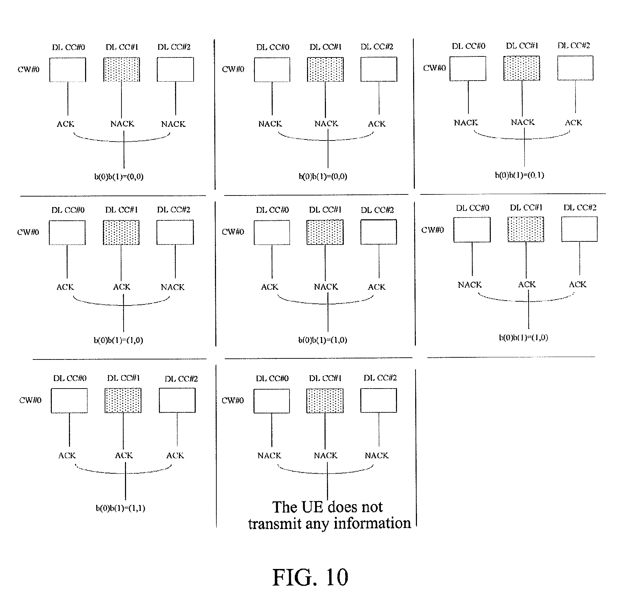

As shown in FIG. 10, in a LTE-Advanced communication system, there is a certain UE having carrier aggregation ability, a base station notifies the UE that a downlink carrier aggregation set is {DL CC#0, DL CC#1, DL CC #2} through the high layer signaling, the downlink transmission mode of each downlink component carrier is a non-MIMO mode, and the base station notifies the UE though the high layer signaling to transmit ACK/NACK messages using the bundling way 2-2; and it is assumed that all the DL CC#0/#1/#2 of the base station have data to schedule to the UE, and additionally, it is assumed that DL CC#1 is a primary downlink component carrier.

Meanwhile, it is assumed that in the bundling way 2-2, the meanings of the four states of the 2-bit information fed back are as follows:

state 1, b(0)b(1)=(0,0), indicating that the UE receives 1 downlink component carrier which is fed back as ACK and the index of that component carrier is 0 or 2;

state 2, b(0)b(1)=(0,1), indicating that the UE receives 1 downlink component carrier which is fed back as ACK and the index of that downlink component carrier is 1;

state 3, b(0)b(1)=(1,0), indicating that the UE receives 2 downlink component carriers which are fed back as ACK;

state 4, b(0)b(1)=(1,1), indicating that the ACK/NACK messages of the 3 downlink component carriers received by the UE are all ACK.

When the UE in the current sub-frame does not receive any PDCCH or the ACK/NACK messages of the three received downlink component carriers are all NACK, the UE does not transmit any information.

When the UE receives three downlink component carriers, and the corresponding ACK/NACK messages are {ACK, NACK, NACK}, since only one downlink component carrier is fed back as ACK and its corresponding index of the downlink component carrier is 0, the UE transmits the 2-bit information b(0)b(1)=(0,0) by the PUCCH format 1b on the PUCCH corresponding to the primary carrier DL CC#1.

When the UE receives three downlink component carriers, and the corresponding ACK/NACK messages are {NACK, NACK, ACK}, since only one downlink component carrier is fed back as ACK and its corresponding index of downlink component carrier is 2, the UE transmits the 2-bit information b(0)b(1)=(0,0) by the PUCCH format 1b on the PUCCH corresponding to the primary carrier DL CC#1.

When the UE receives three downlink component carriers, and the corresponding ACK/NACK messages are {NACK, ACK, NACK}, since only one downlink component carrier is fed back as ACK and its corresponding index of the downlink component carrier is 1, the UE transmits the 2-bit information b(0)b(1)=(0,1) by the PUCCH format 1b on the PUCCH corresponding to the primary carrier DL CC#1.

When the UE receives three downlink component carriers, and the corresponding ACK/NACK messages are {ACK, ACK, NACK} or {ACK, ACK, NACK} or {ACK, ACK, NACK}, since two downlink component carriers are fed back as ACK, the UE transmits the 2-bit information b(0)b(1)=(1,0) by the PUCCH format 1b on the PUCCH corresponding to the primary carrier DL CC#1.

When the UE receives three downlink component carriers, and the corresponding ACK/NACK messages are {ACK, ACK, ACK}, since three downlink component carriers are fed back as ACK, the UE transmits the 2-bit information b(0)b(1)=(1,1) by the PUCCH format 1b on the PUCCH corresponding to the primary carrier DL CC#1.

When the UE receives three downlink component carriers, and the corresponding ACK/NACK messages are {NACK, NACK, NACK}, since three downlink component carriers are fed back as NACK, the UE does not transmit any information.

Embodiment 10

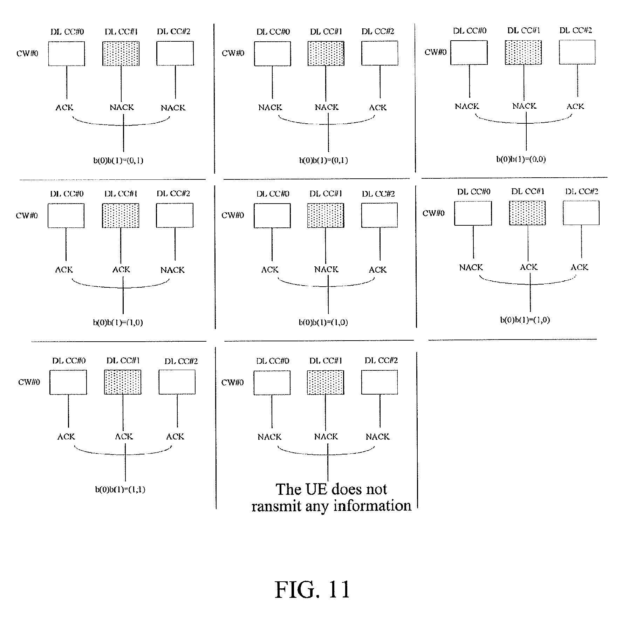

As shown in FIG. 11, in a LTE-Advanced communication system, there is a certain UE having carrier aggregation ability, a base station notifies the UE through the high layer signaling that a downlink carrier aggregation set is {DL CC#0, DL CC#1, DL CC #2}, the downlink transmission mode of each downlink component carrier is a non-MIMO mode, and the base station notifies the UE though the high layer signaling to transmit ACK/NACK message using the bundling way 2-2; and it is assumed that all the DL CC#0/#1/#2 of the base station have data to schedule to the UE, and additionally, it is assumed that DL CC#1 is a primary downlink component carrier.

Meanwhile, it is assumed that in the bundling way 2-2, the meanings of the four states of the 2-bit information fed back are as follows:

state 1, $b(0)b(1)=(0,0)$, indicating that the UE receives 1 downlink component carrier which is fed back as ACK and that downlink component carrier is the primary component carrier;

state 2, $b(0)b(1)=(0,1)$, indicating that the UE receives 1 downlink component carrier which is fed back as ACK and that downlink component carrier is a secondary component carrier;

state 3, $b(0)b(1)=(1,0)$, indicating that the UE receives 2 downlink component carriers which are fed back as ACK;

state 4, $b(0)b(1)=(1,1)$, indicating that the ACK/NACK messages of the 3 downlink component carriers received by the UE are all ACK.

When the UE in the current sub-frame does not receive any PDCCH or the ACK/NACK messages of the three received downlink component carriers are all NACK, the UE does not transmit any information.

When the UE receives three downlink component carriers, and the corresponding ACK/NACK messages are {ACK, NACK, NACK}, since only one downlink component carrier is fed back as ACK and its corresponding downlink component carrier is the secondary component carrier, the UE transmits the 2-bit information $b(0)b(1)=(0,1)$ by the PUCCH format 1b on the PUCCH corresponding to the primary carrier DL CC#1.

When the UE receives three downlink component carriers, and the corresponding ACK/NACK messages are {NACK, NACK, ACK}, since only one downlink component carrier is fed back as ACK and its corresponding downlink component carrier is the secondary component carrier, the UE transmits the 2-bit information $b$

$(0)b(1)=(0,0)$ by the PUCCH format 1b on the PUCCH corresponding to the primary carrier DL CC#1.

When the UE receives three downlink component carriers, and the corresponding ACK/NACK messages are {NACK, ACK, NACK}, since only one downlink component carrier is fed back as ACK and its corresponding downlink component carrier is the primary component carrier, the UE transmits the 2-bit information $b(0)b(1)=(0,0)$ by the PUCCH format 1b on the PUCCH corresponding to the primary carrier DL CC#1.

When the UE receives three downlink component carriers, and the corresponding ACK/NACK messages are {ACK, ACK, NACK} or {ACK, ACK, NACK} or {ACK, ACK, NACK}, since two downlink component carriers are fed back as ACK, the UE transmits the 2-bit information $b(0)b(1)=(1,0)$ by the PUCCH format 1b on the PUCCH corresponding to the primary carrier DL CC#1.

When the UE receives three downlink component carriers, and the corresponding ACK/NACK messages are {ACK, ACK, ACK}, since three downlink component carriers are fed back as ACK, the UE transmits the 2-bit information $b(0)b(1)=(1,1)$ by the PUCCH format 1b on the PUCCH corresponding to the primary carrier DL Cm#1.

When the UE receives three downlink component carriers, and the corresponding ACK/NACK messages are {NACK, NACK, NACK}, since three downlink component carriers are fed back as NACK, the UE does not transmit any information.

The above description is only preferred embodiments of the present invention, and is not used to limit the present invention. For a person skilled in the art, the present invention may have various modifications and changes. Any modification, equivalent substitution, improvement, and so on, made within the spirit and principle of the present invention shall all fall into the protection scope of the present invention.

Industrial Applicability

In the above technical scheme of the present invention, a method for feeding back an acknowledgement/negative acknowledgement (ACK/NACK) message on a physical uplink control channel in a scenario of carrier aggregation.

**Claims**

1.  A method for transmitting an acknowledgement/negative acknowledgement message, comprising:

    a terminal performing a bundling operation on acknowledgement/negative acknowledgement (ACK/NACK) messages of various received downlink component carriers, and transmitting the bundled ACK/NACK message on a physical uplink control channel appointed by a base station and the terminal.

2. The method according to claim 1, wherein, when downlink control information received by the terminal comprises downlink assignment information,
the step of the terminal performing the bundling operation on the ACK/NACK messages of various received downlink component carriers comprises:

the terminal performing a logical AND operation on the ACK/NACK messages of codewords corresponding to various received component carriers to obtain the bundled ACK/NACK message; wherein, if a downlink transmission mode of at least one of the downlink component carriers configured by the base station for the terminal belongs to a transmission mode comprising 2 codewords, the bundled ACK/NACK message is 2 bits, and if the downlink transmission modes of the downlink component carriers configured by the base station for the terminal all belong to a transmission mode with only 1 codeword, the bundled ACK/NACK message is 1 bit;
the step of transmitting the bundled ACK/NACK message on the physical uplink control channel appointed by the base station and the terminal comprises: the terminal feeding back the 1-bit or 2-bit bundled ACK/NACK message by using a format 1a or a format 1b.

3. The method according to claim 2, further comprising:

the terminal not feeding back any information when the terminal detects loss of a physical downlink control channel of a downlink component carrier.

4. The method according to claim 3, further comprising:
the terminal judging whether the loss of the physical downlink control channel of the downlink component carrier occurs according to the downlink assignment information in the received downlink control information of each component carrier.

5. The method according to claim 2, wherein,
the downlink assignment information is an index of the downlink component carrier assigned in a current sub-frame by the base station to the terminal for scheduling; the physical uplink control channel used by the terminal for feeding back the bundled ACK/ NACK message is a physical uplink control channel corresponding to the downlink component carrier with a maximum index of the downlink component carrier indicated by the downlink assignment information detected by the terminal.

6. The method according to claim 2, wherein, the downlink assignment information is the number of all downlink component carriers comprising a physical downlink shared channel (PDSCH) which are scheduled by the base station to the terminal in a current sub-frame.

7. The method according to claim 6, wherein,
the downlink assignment information is indicated using 2 bits in the downlink control information, which comprises four states;
a first state is used to indicate that the number of all downlink component carriers scheduled by the base station to the terminal in the current sub-frame is 1 or 5;
a second state is used to indicate that the number of all downlink component carriers scheduled by the base station to the terminal in the current sub-frame is 2;
a third state is used to indicate that the number of all downlink component carriers scheduled by the base station to the terminal in the current sub-frame is 3;
a fourth state is used to indicate that the number of all downlink component carriers scheduled by the base station to the terminal in the current sub-frame is 4.

8. The method according to claim 7, wherein, when the downlink assignment information received by the terminal is the first state and the terminal receives more than one downlink component carrier, the downlink assignment information indicates that the number of all downlink component carriers scheduled by the base station to the terminal in the current sub-frame is 5, otherwise, the number is 1.

9. The method according to claim 6, 7 or 8, further comprising: when the number of all downlink component carriers scheduled by the base station to the terminal in the current sub-frame, which is indicated in the downlink assignment information detected by the terminal, is not equal to the number of downlink component carriers detected actually by the terminal in the current sub-frame, the terminal judging that loss of a physical downlink control channel occurs to a downlink component carrier.

10. The method according to claim 1, wherein, when downlink control information received by the terminal comprises downlink assignment information,
in the step of the terminal performing the bundling operation on the ACK/NACK messages of various received downlink component carriers, the bundled ACK/NACK message is 2 bits, and the bundled ACK/ NACK message has a mapping relationship with a result of a logical AND operation on the ACK/NACK messages of all component carriers received by the terminal and a maximum value in indices of the downlink component carriers indicated by the downlink assignment information detected by the terminal; the ACK/NACK message of each component carrier is a result after the logical AND operation is performed on ACK/NACK messages of various codewords of that component carrier; the step of the terminal transmitting the bundled ACK/NACK message on the physical uplink control channel appointed by the base station and the terminal comprises: the terminal feeding back the bundled ACK/NACK message using a format 1b.

11. The method according to claim 10, wherein, the bundled ACK/NACK message comprises four states; a first state is used to indicate that there is a component carrier having a decoding error in all the downlink component carriers received by the terminal or the terminal judges that there is loss of a physical downlink control channel of a downlink component carrier; a second state is used to indicate that all the downlink component carriers received by the terminal are correctly decoded, and a maximum value in the indices of the downlink component carriers indicated by the downlink assignment information detected by the terminal is 0 or 3; a third state indicates that all the downlink component carriers received by the terminal are correctly decoded, and a maximum value in the indices of the downlink component carriers indicated by the downlink assignment information detected by the terminal is 1 or 4; a fourth state indicates that all the downlink component carriers received by the terminal are correctly decoded, and a maximum value in the indices of the downlink component carriers indicated by the downlink assignment information detected by the terminal is 2.

12. The method according to claim 1, wherein, when downlink control information received by the terminal comprises downlink assignment information, in the step of the terminal performing the bundling operation on the ACK/NACK messages of various received downlink component carriers, the bundled ACK/NACK message is 2 bits, the bundled ACK/NACK message has a mapping relationship with the number of former continuous multiple downlink component carriers which are fed back as ACK after the ACK/NACK messages of various component carriers received by the terminal are sequenced according to a certain order, and the ACK/NACK message of each component carrier is a result after a logical AND operation is performed on ACK/NACK messages of various codewords of that component carrier; the step of the terminal transmitting the bundled ACK/NACK message on the physical uplink control channel appointed by the base station and the terminal comprises: the terminal feeding back the bundled ACK/NACK message using a format 1b.

13. The method according to claim 12, wherein, the ACK/NACK messages of various component carriers received by the terminal being sequenced according to a certain order means that the terminal performs sequencing in an ascending order or a descending order according to indices of the downlink component carriers indicated by the received downlink assignment information.

14. The method according to claim 12, wherein, the bundled ACK/NACK message comprises four states; a first state is used to indicate that the number of former continuous multiple downlink component carriers which are fed back as ACK after the ACK/NACK messages of various component carriers received by the terminal are sequenced according to a certain order is 0; a second state is used to indicate that the number of former continuous multiple downlink component carriers which are fed back as ACK after the ACK/NACK messages of various component carriers received by the terminal are sequenced according to a certain order is 1 or 4; a third state is used to indicate that the number of former continuous multiple downlink component carriers which are fed back as ACK after the ACK/NACK messages of various component carriers received by the terminal are sequenced according to a certain order is 2 or 5; a fourth state is used to indicate that the number of former multiple received downlink component carriers which are fed back as ACK after the ACK/NACK messages of various component carriers received by the terminal are sequenced according to a certain order is 3; or:

a first state is used to indicate that the number of former continuous multiple downlink component carriers which are fed back as ACK after the ACK/NACK messages of various component carriers received by the terminal are sequenced according to a certain order is 1 or 5; a second state is used to indicate that the number of former continuous multiple downlink component carriers which are fed back as ACK after the ACK/NACK messages of various component carriers received by the terminal are sequenced according to a certain order is 2; a third state is used to indicate that the number of former continuous multiple downlink component carriers which are fed back as ACK after the ACK/NACK messages of various component carriers received by the terminal are sequenced according to a certain order is 3; a fourth state is used to indicate that the number of former multiple, received downlink component carriers which are fed back as ACK after the ACK/NACK messages of various component carriers received by the terminal are sequenced according to a certain order is 4;
when none of the ACK/NACK messages of various downlink component carriers received by the terminal is fed back as ACK, the terminal does not transmit any information.

15. The method according to claim 2, 10 or 12, wherein, the downlink assignment information is an index of the downlink component carrier assigned by the base station to the terminal for scheduling in a current sub-frame.

16. The method according to claim 15, wherein, the downlink assignment information is indicated using 2 bits in the downlink control information, which comprises four states; a first state is used to indicate that the index of the downlink component carrier in the scheduled downlink component carriers is 1 or 5; a second state is used to indicate that the index of the downlink component carrier in the scheduled downlink component carriers is 2; a third state is used to indicate that the index of the downlink component carrier in the scheduled downlink component carriers is 3; a fourth state is used to indicate that the index of the downlink component carrier in the scheduled downlink component carriers is 4.

17. The method according to claim 16, wherein, when the downlink assignment information received by the terminal is the first state and the terminal receives more than one downlink component carrier, the downlink assignment information indicates that the index of that downlink component carrier in the scheduled downlink component carriers is 5; otherwise, the index of that downlink component carrier in the scheduled downlink component carriers is 1.

18. The method according to claim 16, further comprising: when a maximum value in the indices of the downlink component carriers indicated by the downlink assignment information detected by the terminal is not equal to the number of physical downlink control channels actually detected by the terminal, the terminal judging that loss of a physical downlink control channel occurs to a downlink component carrier.

19. The method according to claim 1, wherein, when downlink control information received by the terminal does not comprise downlink assignment information, in the step of the terminal performing the bundling operation on the ACK/NACK messages of various received downlink component carrier, the bundled ACK/NACK message is 2 bits, and the bundled ACK/NACK message has a mapping relationship with a result of a logical AND operation on the ACK/NACK messages of all the component carriers received by the terminal and the number of ACK messages that are bundled together; the ACK/NACK message of each component carrier is a result after a logical AND operation is performed on ACK/NACK messages of various codewords of that component carrier; the step of transmitting the bundled ACK/NACK message on the physical uplink control channel appointed by the base station and the terminal comprises: the terminal feeding back the bundled ACK/NACK message using a format 1b.

20. The method according to claim 19, wherein, the bundled ACK/NACK message comprises four states; a first state is used to indicate that there is a component carrier having a decoding error in all the downlink component carriers received by the terminal; a second state is used to indicate that all the downlink component carriers received by the terminal are correctly decoded, and the number of ACK messages that are bundled together is 1 or 4; a third state is used to indicate that all the downlink component carriers received by the terminal are correctly decoded, and the number of ACK messages that are bundled together is 2 or 5; a fourth state is used to indicate that all the downlink component carriers received by the terminal are correctly decoded, and the number of ACK messages that are bundled together is 3.

21. The method according to claim 1, wherein, when downlink control information received by the terminal does not comprise downlink assignment information, in the step of the terminal performing the bundling operation on the ACK/NACK messages of various received downlink component carriers, the bundled ACK/NACK message is 2 bits, and the bundled ACK/NACK message has a mapping relationship with the number of component carriers which are fed back as ACK messages in the ACK/NACK messages of all the component carriers received by the terminal; the ACK/NACK message of each component carrier is a result after a logical AND operation is performed on ACK/NACK messages of various codewords of that component carrier; the step of the terminal transmitting the bundled ACK/NACK message on the physical uplink control channel appointed by the base station and the terminal comprises: the terminal feeding back the bundled ACK/NACK message using a format 1b.

22. The method according to claim 21, wherein, the bundled ACK/NACK message comprises four states; a first state is used to indicate that there is no downlink component carrier which is fed back as ACK in the ACK/NACK messages of all the downlink component carriers received by the terminal; a second state is used to indicate that the number of downlink component carriers which are fed back as ACK in the ACK/NACK messages of all the downlink component carriers received by the terminal is 1 or 4; a third state is used to indicate that the number of downlink component carriers which are fed back as ACK in the ACK/NACK messages of all the downlink component carriers received by the terminal is 2 or 5; a fourth state is used to indicate that the number of downlink component carriers which are fed back as ACK in the ACK/NACK messages of all the downlink component carriers received by the terminal is 3.

23. The method according to claim 21, wherein, when the number of downlink component carriers configured for the terminal is 2, the bundled ACK/NACK message comprises four states;
a first state is used to indicate that the ACK/NACK messages of the 2 downlink component carriers received by the terminal are both NACK; a second state is used to indicate that the ACK/NACK message of a first downlink component carrier received by the terminal is NACK, and the ACK/NACK message of a second downlink component carrier received is ACK; a third state is used to indicate that the ACK/NACK message of a first downlink component carrier received by the terminal is NACK, and the ACK/NACK message of a second downlink component carrier received is ACK; a fourth state is used to indicate that the ACK/NACK messages of the 2 downlink component carriers received by the terminal are both ACK.

24. The method according to claim 21, wherein, when the number of downlink component carriers configured for the terminal is 3, the bundled ACK/NACK message comprises four states;
a first state is used to indicate that the terminal receives 1 downlink component carrier which is fed back as ACK and the index of that component carrier is 0 or 2; a second state is used to indicate that the terminal receives 1 downlink component carrier which is fed back as ACK and the index of that downlink component carrier is 1; a third state is used to indicate that the terminal receives 2 downlink component carriers which are fed back as ACK; a fourth state is used to indicate that the ACK/NACK messages of the 3 downlink component carriers received by the terminal are all ACK;
or,
a first state is used to indicate that the terminal receives 1 downlink component carrier which is fed back as ACK and that component carrier is a primary downlink component carrier; a second state is used to indicate that the terminal receives 1 downlink component carrier which is fed back as ACK and that downlink component carrier is a secondary downlink component carrier; a third state is used to indicate that the terminal receives 2 downlink component carriers which are fed back as ACK; a fourth state is used to indicate that the ACK/NACK messages of the 3 downlink component carriers received by the terminal are all ACK.

25. The method according to claim 10, 12, 19 or 21, further comprising: when the terminal does not detect any physical downlink control information in a current sub-frame, the terminal not transmitting any information.

26. The method according to claim 6, 10, 12, 19 or 21, wherein, the physical uplink control channel used by the terminal to feed back the bundled ACK/NACK message is a physical uplink control channel corresponding to a primary downlink component carrier, or a physical uplink control channel configured by a high layer.

27. A terminal, configured to:

perform a bundling operation on acknowledgement/negative acknowledgement (ACK/NACK) messages of various received downlink component carriers, and transmit the bundled ACK/NACK message on a physical uplink control channel appointed by the terminal and a base station.

28. The terminal according to claim 27, configured to perform the bundling and transmitting operations in the following way when received downlink control information comprises downlink assignment information:

performing a logical AND operation on ACK/NACK messages of codewords corresponding to various received component carriers to obtain the bundled ACK/NACK message; wherein, if a downlink transmission mode of at least one of downlink component carriers configured by the base station for the terminal belongs to a transmission mode comprising 2 codewords, the bundled ACK/NACK message is 2 bits; if downlink transmission modes of the downlink component carriers configured by the base station for the terminal all belong to a transmission mode of only 1 codeword, the bundled ACK/NACK message is 1 bit; and feeding back the 1-bit or 2-bit bundled ACK/NACK message using a format 1a or a format 1b.

29. The terminal according to claim 27, wherein, when downlink control information received by the terminal comprises downlink assignment information,

the bundled ACK/NACK message is 2 bits, and the bundled ACK/NACK message has a mapping relationship with a result of a logical AND operation on the ACK/NACK messages of all the component carriers received by the terminal and a maximum value in indices of the downlink component carriers indicated by the downlink assignment information detected by the terminal; the ACK/NACK message of each component carrier is a result after the logical AND operation is performed on ACK/NACK messages of various codewords of that component carrier; and,

the terminal is configured to transmit the bundled ACK/NACK message on the physical uplink control channel appointed by the base station and the terminal in the following way: feeding back the bundled ACK/NACK message using a format 1b.

30. The terminal according to claim 29, wherein, the bundled ACK/NACK message comprises four states; a first state is used to indicate that there is a component carrier having a decoding error in all the downlink component carriers received by the terminal or the terminal judges that there is loss of a physical downlink control channel of a downlink component carrier;

a second state is used to indicate that all the downlink component carriers received by the terminal are correctly decoded, and a maximum value in the indices of the downlink component carriers indicated by the downlink assignment information detected by the terminal is 0 or 3;

a third state indicates that all the downlink component carriers received by the terminal are correctly decoded, and a maximum value in the indices of the downlink component carriers indicated by the downlink assignment information detected by the terminal is 1 or 4;

a fourth state indicates that all the downlink component carriers received by the terminal are correctly decoded, and a maximum value in the indices of the downlink component carriers indicated by the downlink assignment information detected by the terminal is 2.

31. The terminal according to claim 27, wherein, when downlink control information received by the terminal comprises downlink assignment information, the bundled ACK/NACK message is 2 bits, the bundled ACK/NACK message has a mapping relationship with the number of former continuous multiple downlink component carriers which are fed back as ACK after the ACK/NACK messages of various component carriers received by the terminal are sequenced according to a certain order, and the ACK/NACK message of each component carrier is a result after a logical AND operation is performed on ACK/NACK messages of various codewords of that component carrier;

the terminal is configured to transmit the bundled ACK/NACK message on the physical uplink control channel appointed by the base station and the terminal in the following way: feeding back the bundled ACK/NACK message using a format 1b.

32. The terminal according to claim 31, wherein, the bundled ACK/NACK message comprises four states; a first state is used to indicate that the number of former continuous multiple downlink component carriers which are fed back as ACK after the ACK/NACK messages of various component carriers received by the terminal are sequenced according to a certain order is 0;

a second state is used to indicate that the number of former continuous multiple downlink component carriers which are fed back as ACK after the ACK/NACK messages of various component carriers received by the terminal are sequenced according to a certain order is 1 or 4;

a third state is used to indicate that the number of former continuous multiple downlink component carriers which are fed back as ACK after the ACK/NACK messages of various component carriers received by the terminal are sequenced according to a certain order is 2 or 5;

a fourth state is used to indicate that the number of former multiple received downlink component carriers which are fed back as ACK after the ACK/NACK messages of various component carriers received by the terminal are sequenced according to a certain order is 3;

or:

a first state is used to indicate that the number of former continuous multiple downlink component carriers which are fed back as ACK after the ACK/NACK messages of various component carriers received by the terminal are sequenced according to a certain order is 1 or 5;

a second state is used to indicate that the number of former continuous multiple downlink component carriers which are fed back as ACK after the ACK/NACK messages of various component carriers received by the terminal are sequenced according to a certain order is 2;

a third state is used to indicate that the number of former continuous multiple downlink component carriers which are fed back as ACK after the ACK/NACK messages of various component carriers received by the terminal are sequenced according to a certain order is 3;

a fourth state is used to indicate that the number of former multiple received downlink component carriers which are fed back as ACK after the ACK/NACK messages of various component carriers received by the terminal are sequenced according to a certain order is 4;

the terminal is further configured to: not transmit any information when none of the ACK/NACK messages of various received downlink component carriers is fed back as ACK.

33. The terminal according to claim 27, wherein, when downlink control information received by the terminal does not comprise downlink assignment information, the bundled ACK/NACK message is 2 bits, and the bundled ACK/NACK message has a mapping relationship with a result of a logical AND operation on the ACK/NACK messages of all the component carriers received by the terminal and the number of ACK messages that are bundled together; the ACK/NACK message of each component carrier is a result after a logical AND operation is performed on ACK/NACK messages of various codewords of that component carrier;

the terminal is configured to transmit the bundled ACK/NACK message on the physical uplink control channel appointed by the base station and the terminal in the following way: feeding back the bundled ACK/NACK message using a format 1b.

34. The terminal according to claim 33, wherein, the bundled ACK/NACK message comprises four states;

a first state is used to indicate that there is a component carrier having a decoding error in all the downlink component carriers received by the terminal;

a second state is used to indicate that all the downlink component carriers received by the terminal are correctly decoded, and the number of ACK messages that are bundled together is 1 or 4;

a third state is used to indicate that all the downlink component carriers received by the terminal are correctly decoded, and the number of ACK messages that are bundled together is 2 or 5;

a fourth state is used to indicate that all the downlink component carriers received by the terminal are correctly decoded, and the number of ACK messages that are bundled together is 3.

35. The terminal according to claim 27, wherein, when downlink control information received by the terminal does not comprise downlink assignment information, the bundled ACK/NACK message is 2 bits, and the bundled ACK/NACK message has a mapping relationship with the number of component carriers which are fed back as ACK messages in the ACK/NACK messages of all the component carriers received by the terminal; the ACK/NACK message of each component carrier is a result after a logical AND operation is performed on ACK/NACK messages of various codewords of that component carrier;

the terminal is configured to transmit the bundled ACK/NACK message on the physical uplink control channel appointed by the base station and the terminal in the following way: feeding back the bundled ACK/NACK message using a format 1b.

36. The terminal according to claim 35, wherein, the bundled ACK/NACK message comprises four states;

a first state is used to indicate that there is no downlink component carrier which is fed back as ACK in the ACK/NACK messages of all the downlink component carriers received by the terminal; a second state is used to indicate that the number of downlink component carriers which are fed back as ACK in the ACK/NACK messages of all the downlink component carriers received by the terminal is 1 or 4; a third state is used to indicate that the number of downlink component carriers which are fed back as ACK in the ACK/NACK messages of all the downlink component carriers received by the terminal is 2 or 5; a fourth state is used to indicate that the number of downlink component carriers which are fed back as ACK in the ACK/NACK messages of all the downlink component carriers received by the terminal is 3.

37. The terminal according to claim 35, wherein, when the number of downlink component carriers configured for the terminal is 2, the bundled ACK/NACK message comprises four states;

a first state is used to indicate that the ACK/NACK messages of the 2 downlink component carriers received by the terminal are both NACK; a second state is used to indicate that the ACK/NACK message of a first downlink component carrier received by the terminal is NACK, and the ACK/NACK message of a second downlink component carrier received is ACK; a third state is used to indicate that the ACK/NACK message of a first downlink component carrier received by the terminal is NACK, and the ACK/NACK message of a second downlink component carrier received is ACK; a fourth state is used to indicate that the ACK/NACK messages of the 2 downlink component carriers received by the terminal are both ACK.

38. The terminal according to claim 35, wherein, when the number of downlink component carriers configured for the terminal is 3, the bundled ACK/NACK message comprises four states;

a first state is used to indicate that the terminal receives 1 downlink component carrier which is fed back as ACK and the index of that component carrier is 0 or 2; a second state is used to indicate that the terminal receives 1 downlink component carrier which is fed back as ACK and the index of that downlink component carrier is 1; a third state is used to indicate that the terminal receives 2 downlink component carriers which are fed back as ACK; a fourth state is used to indicate that the ACK/NACK messages of the 3 downlink component carriers received by the terminal are all ACK;
or,
a first state is used to indicate that the terminal receives 1 downlink component carrier which is fed back as ACK and that component carrier is a primary downlink component carrier; a second state is used to indicate that the terminal receives 1 downlink component carrier which is fed back as ACK and that downlink component carrier is a secondary downlink component carrier; a third state is used to indicate that the terminal receives 2 downlink component carriers which are fed back as ACK; a fourth state is used to indicate that the ACK/NACK messages of the 3 downlink component carriers received by the terminal are all ACK.

One radio frame is 10ms

One time slot is 0.5ms

| #0 | #1 | #2 | #3 | . . . . . . . . . . . | #18 | #19 |

One sub-frame

# FIG. 1

DL CC#0  DL CC#1  DL CC#2  DL CC#3

CW#0

$DAI=(0,0)$  $DAI=(0,1)$  $DAI=(1,0)$  $DAI=(1,1)$
$V_{DAI}^{DL}=1$  $V_{DAI}^{DL}=2$  $V_{DAI}^{DL}=3$  $V_{DAI}^{DL}=4$
ACK  ACK  NACK  ACK

NACK after bundling — b(0)

DL CC#0  DL CC#1  DL CC#2  DL CC#3

CW#0

$DAI=(0,0)$  $DAI=(0,1)$  $DAI=(1,0)$  $DAI=(1,1)$
$V_{DAI}^{DL}=1$  $V_{DAI}^{DL}=2$  $V_{DAI}^{DL}=3$  $V_{DAI}^{DL}=4$
ACK  ACK  ACK  ACK

NACK after bundling — b(0)

DL CC#0  DL CC#1  DL CC#2  DL CC#3

CW#0

$DAI=(0,0)$  $DAI=(0,1)$  $DAI=(1,1)$
$V_{DAI}^{DL}=1$  $V_{DAI}^{DL}=2$  $V_{DAI}^{DL}=4$
ACK  ACK  ACK

The UE detects that the loss of
PDCCH occurs to DL CC#2, and
the UE does not transmit any signal

DL CC#0  DL CC#1  DL CC#2  DL CC#3

CW#0

$DAI=(0,0)$  $DAI=(0,1)$  $DAI=(1,0)$
$V_{DAI}^{DL}=1$  $V_{DAI}^{DL}=2$  $V_{DAI}^{DL}=3$
ACK  ACK  ACK

The UE does not detect that loss of
PDCCH of the downlink component
carrier occurs, thus the UE will
transmit the bundled ACK using the
PUCCH corresponding to DL CC#2

# FIG. 2

ACK after bundling — b(0)

ACK    ACK    ACK    ACK

DL CC#0   DL CC#1   DL CC#2   DL CC#3

CW#0

DAI=(0,0)  DAI=(0,1)  DAI=(1,0)  DAI=(1,1)

$V_{DAI}^{DL}=1$  $V_{DAI}^{DL}=2$  $V_{DAI}^{DL}=3$  $V_{DAI}^{DL}=4$

CW#1

ACK    ACK   NACK   ACK

NACK after bundling — b(1)

---

ACK after bundling — b(0)

ACK    ACK    ACK    ACK

DL CC#0   DL CC#1   DL CC#2   DL CC#3

CW#0

DAI=(0,0)  DAI=(0,1)  DAI=(1,0)  DAI=(1,1)

$V_{DAI}^{DL}=1$  $V_{DAI}^{DL}=2$  $V_{DAI}^{DL}=3$  $V_{DAI}^{DL}=4$

CW#1

ACK    ACK    ACK    ACK

ACK after bundling — b(1)

---

ACK    ACK        ACK

DL CC#0   DL CC#1   DL CC#2   DL CC#3

CW#0

DAI=(0,0)  DAI=(0,1)        DAI=(1,1)

$V_{DAI}^{DL}=1$  $V_{DAI}^{DL}=2$      $V_{DAI}^{DL}=4$

CW#1

ACK    ACK        ACK

The UE detects that the loss of PDCCH occurs to DL CC#2, and the UE does not transmit any signal

---

ACK after bundling — b(0)

ACK    ACK    ACK    ACK

DL CC#0   DL CC#1   DL CC#2   DL CC#3

CW#0

DAI=(0,0)  DAI=(0,1)  DAI=(1,0)  DAI=(1,1)

$V_{DAI}^{DL}=1$  $V_{DAI}^{DL}=2$  $V_{DAI}^{DL}=3$

CW#1

ACK    ACK    ACK

The UE does not detect that loss of PDCCH of the downlink component carrier occurs, thus the UE will transmit the bundled {ACK, ACK} using the PUCCH corresponding to DL CC#2

FIG. 3

DL CC#0    DL CC#1    DL CC#2    DL CC#3

CW#0

$DAI=(1,1)$   $DAI=(1,1)$   $DAI=(1,1)$   $DAI=(1,1)$

$V_{DAI}^{DL}=4$   $V_{DAI}^{DL}=4$   $V_{DAI}^{DL}=4$   $V_{DAI}^{DL}=4$

ACK    ACK    NACK    ACK

**NACK after bundling — b(0)**

DL CC#0    DL CC#1    DL CC#2    DL CC#3

CW#0

$DAI=(1,1)$   $DAI=(1,1)$   $DAI=(1,1)$   $DAI=(1,1)$

$V_{DAI}^{DL}=4$   $V_{DAI}^{DL}=4$   $V_{DAI}^{DL}=4$   $V_{DAI}^{DL}=4$

ACK    ACK    ACK    ACK

**NACK after bundling — b(0)**

DL CC#0    DL CC#1    DL CC#2    DL CC#3

CW#0

$DAI=(1,1)$   $DAI=(1,1)$     $DAI=(1,1)$

$V_{DAI}^{DL}=4$   $V_{DAI}^{DL}=4$     $V_{DAI}^{DL}=4$

ACK    ACK      ACK

**The UE detects that the loss of PDCCH occurs to DL CC#2, and the UE does not transmit any signal**

DL CC#0    DL CC#1    DL CC#2    DL CC#3

CW#0

$DAI=(1,1)$   $DAI=(1,1)$   $DAI=(1,1)$

$V_{DAI}^{DL}=4$   $V_{DAI}^{DL}=4$   $V_{DAI}^{DL}=4$

ACK    ACK    ACK

**The UE detects that the loss of PDCCH occurs to DL CC#2, and the UE does not transmit any signal**

# FIG. 4

FIG. 5

FIG. 6

DL CC#0    DL CC#1    DL CC#2    DL CC#3

CW#0

ACK        ACK        NACK        ACK

b(0)b(1)=(0,0)

DL CC#0    DL CC#1    DL CC#2    DL CC#3

CW#0

ACK        ACK        ACK

b(0)b(1)=(1,1)

DL CC#0    DL CC#1    DL CC#2    DL CC#3

CW#0

ACK        ACK

b(0)b(1)=(1,0)

DL CC#0    DL CC#1    DL CC#2    DL CC#3

CW#0

ACK        ACK        ACK        ACK

b(0)b(1)=(0,1)

DL CC#0    DL CC#1    DL CC#2    DL CC#3

CW#0

ACK        NACK

b(0)b(1)=(0,0)

DL CC#0    DL CC#1    DL CC#2    DL CC#3

CW#0

ACK        ACK        NACK

b(0)b(1)=(0,0)

FIG. 7

FIG. 8

DL CC#0        DL CC#1

CW#0 [        ] ACK    [        ] NACK

CW#1 [        ] NACK   [        ] NACK

NACK after logical    NACK after logical
AND operation on      AND operation on
the codeword stream   the codeword stream

b(0)b(1)=(0,0)

DL CC#0        DL CC#1

CW#0 [        ] ACK    [        ] NACK

CW#1 [        ] ACK    [        ] NACK

ACK after logical     NACK after logical
AND operation on      AND operation on
the codeword stream   the codeword stream

b(0)b(1)=(1,0)

DL CC#0        DL CC#1

CW#0 [        ] ACK    [        ] ACK

CW#1 [        ] NACK   [        ] ACK

NACK after logical    ACK after logical
AND operation on      AND operation on
the codeword stream   the codeword stream

b(0)b(1)=(0,1)

DL CC#0        DL CC#1

CW#0 [        ] ACK    [        ] ACK

CW#1 [        ] ACK    [        ] ACK

ACK after logical     ACK after logical
AND operation on      AND operation on
the codeword stream   the codeword stream

b(0)b(1)=(1,1)

FIG. 9

FIG. 10

FIG. 11

# INTERNATIONAL SEARCH REPORT

| International application No. |
| --- |
| PCT/CN2010/080562 |

## A. CLASSIFICATION OF SUBJECT MATTER

H04L 1/16 (2006.01) i

According to International Patent Classification (IPC) or to both national classification and IPC

## B. FIELDS SEARCHED

Minimum documentation searched (classification system followed by classification symbols)

IPC: H04L, H04Q, H04W

Documentation searched other than minimum documentation to the extent that such documents are included in the fields searched

Electronic data base consulted during the international search (name of data base and, where practicable, search terms used)

CNPAT, CNTXT, WPI, EPODOC, GOOGLE: ACK NACK NAK ACKNOWLEDGEMENT NEGATIVE DOWNLINK COMPONENT CARRIER BUNDLE PUCCH ALLOCATE LOGIC AND MAP INDEX SEQUENCE NUMBER

## C. DOCUMENTS CONSIDERED TO BE RELEVANT

| Category* | Citation of document, with indication, where appropriate, of the relevant passages | Relevant to claim No. |
| --- | --- | --- |
| PX | CN 101924624 A (ZTE CORPORATION) 22 Dec. 2010 (22.12.2010) claims 1-38 | 1-38 |
| X | CN 101789851 A (ZTE CORPORATION) 28 Jul. 2010 (28.07.2010) paragraphs 10-13, 67, 69, 77, 82-87, 113-115 in the description | 1-9,15-18,26-28 |
| A | CN 101594209 A (ZTE CORPORATION) 02 Dec. 2009 (02.12.2009) the whole document | 1-38 |
| A | CN 101594211 A (ZTE CORPORATION) 02 Dec. 2009 (02.12.2009) the whole document | 1-38 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 May 2011 (03.05.2011) | **26 May 2011 (26.05.2011)** |

| Name and mailing address of the ISA/CN | Authorized officer |
| --- | --- |
| The State Intellectual Property Office, the P.R.China 6 Xitucheng Rd., Jimen Bridge, Haidian District, Beijing, China 100088 Facsimile No. 86-10-62019451 | GAO,Jing Telephone No. (86-10)010-82245169 |

Form PCT/ISA /210 (second sheet) (July 2009)

# INTERNATIONAL SEARCH REPORT
Information on patent family members

International application No.

PCT/CN2010/080562

| Patent Documents referred in the Report | Publication Date | Patent Family | Publication Date |
|---|---|---|---|
| CN 101924624 A | 22.12.2010 | None | |
| CN 101789851 A | 28.07.2010 | None | |
| CN 101594209 A | 02.12.2009 | WO 2010145313 A1 | 23.12.2010 |
| CN 101594211 A | 02.12.2009 | WO 2010145373 A1 | 23.12.2010 |

Form PCT/ISA /210 (patent family annex) (July 2009)